# EUROPÄISCHE PATENTSCHRIFT

(11) **EP 3 516 828 B1**
(45) Veröffentlichungstag und Bekanntmachung des Hinweises auf die Patenterteilung: **15.02.2023**
(21) Anmeldenummer: 17776986.6
(22) Anmeldetag: 22.09.2017
(51) Int. Cl.: H04L 12/403, G06F 13/362, G06F 13/40, H04B 3/54

(54) **KOMMUNIKATIONSSYSTEM ZUR STROMMODULIERTEN DATENÜBERTRAGUNG ÜBER EINE STROMSCHLEIFE**
COMMUNICATION SYSTEM FOR CURRENT-MODULATED DATA TRANSMISSION VIA A CURRENT LOOP
SYSTÈME DE COMMUNICATION POUR TRANSMISSION DE DONNÉES AVEC MODULATION DE COURANT PAR LE BIAIS D'UNE BOUCLE DE COURANT

(30) Priorität: 23.09.2016 DE 102016118004
(43) Veröffentlichungstag der Anmeldung: 31.07.2019
(73) Patentinhaber: Phoenix Contact GmbH & Co.KG, 32825 Blomberg (DE)
(72) Erfinder: TEUTENBERG, Jürgen, 59602 Rüthen (DE); PETER, Henry, 37574 Einbeck (DE); OSTER, Viktor, 32825 Blomberg (DE); SÄCK, Klaus-Peter, 32760 Detmold (DE)
(74) Vertreter: Blumbach · Zinngrebe Patentanwälte PartG mbB
(86) Internationale Anmeldenummer: PCT/EP2017/074036
(87) Internationale Veröffentlichungsnummer: WO 2018/055090

(56) Entgegenhaltungen:
- EP-A1- 3 116 169
- EP-A2- 0 364 082
- WO-A1-2012/080423
- DE-A1- 19 900 869
- US-A1- 2005 132 109

## Beschreibung

Die Erfindung betrifft ein Kommunikationssystem zur strommodulierten Übertragung von Daten zwischen einer Mastereinrichtung und wenigstens einer Slaveeinrichtung, welches in einer sicherheitsgerichteten Automatisierungsanlage einsetzbar ist. Ferner betrifft die Erfindung eine Mastereinrichtung und eine Slaveeinrichtung zur Verwendung in einem solchen Kommunikationssystem sowie ein Verfahren zum automatischen Erkennen der Konfiguration eines solchen Kommunikationssystems.

Bekannt ist, in der Automatisierungstechnik Kommunikationssysteme einzusetzen, welche beispielsweise eine zentrale Steuerung und mehrere E/A-Geräte aufweisen, die über ein Übertragungsmedium miteinander verbunden sind, um Daten untereinander austauschen zu können.

Aus der DE 199 00 869 A1 ist eine Steuer- und Datenübertragungsanlage bekannt, welche im Arbeitsstromprinzip arbeitet und somit für sicherheitsgerichtete Anwendungen nicht zulässig ist. Die bekannte Steuer- und Datenübertragungsanlage weist einen Bus auf, über den nicht nur Daten, sondern auch die Energieversorgung erfolgt. Jeder Teilnehmer der Steuer- und Datenübertragungsanlage wird zwischen einem Sendebetrieb und einem Empfangsbetrieb hin und her geschaltet, um Daten senden oder empfangen zu können.

Aus der WO 2012/080423 A1 ist ein System zum Identifizieren wenigstens einer Einrichtung bekannt, die mittels einer Stromversorgungseinrichtung über eine Stromleitung elektrisch gespeist wird.

Aus der US 2005/0132109 A1 ist ein Verfahren zum Adressieren der Teilnehmer eines Bussystems mittels Identifikationsstöme bekannt.

Aus der EP 0 364 082 A2 ist ein Datenkommunikationssystem bekannt, welches einen Master aufweist, der mit mehreren entfernten Einheiten kommunizieren kann. Hierbei wird sichergestellt, dass auch bei einer fehlerhaften entfernten Einheit das Datenkommunikationssystem ohne Beeinträchtigung weiter betrieben werden kann.

Ein Kommunikationssystem, das in einem Kraftfahrzeug implementiert ist, ist aus der EP 0 836 967 B1 bekannt. Das Kommunikationssystem weist eine Zentraleinheit und mehrere Steuermodule auf, die mittels eines Bussystems verbunden sind, um digitale Daten austauschen zu können. Das Bussystem ist als einadriges System ausgebildet, welches sowohl der Versorgung der Steuermodule mit elektrischer Betriebsenergie als auch der Übertragung der digitalen Daten dient. Die Übertragung der digitalen Daten von der Zentraleinheit zu den Steuermodulen erfolgt durch Spannungsmodulation einer Gleichspannung, während die Aussendung von Datensignalen von den Steuermodulen zur Zentraleinheit durch Modulation eines Gesamtverbraucherstroms erfolgt.

Ein Kommunikationssystem gemäß dem Master-Slave-Prinzip, welches in einem Kraftfahrzeug-Insassenschutzsystem implementiert ist, ist ferner aus der EP 1 180 278 Bl bekannt. Hierbei ist eine übergeordnete Steuereinheit über einen gemeinsamen Datenbus mit Funktionseinheiten verbunden. Die übergeordnete Steuereinheit überträgt Datenworte in Form eines unipolaren Spannungssignals, dessen Pegelzustände zwischen höherem und tieferem Spannungswert wechseln, über den Datenbus zu den Funktionseinheiten. An dem Datenbus liegt somit stets eine Spannung an, so dass die Funktionseinheiten eine Rückmeldung in Form von Stromimpulsen durch eine entsprechende Impedanzbelastung an die übergeordnete Steuereinheit schicken können.

In der DE 10 2015 111 112.8, die eine ältere Patentanmeldung nach §3(2) S.1 Nr. 1 PatG ist, wird ein Datenübertragungssystem zur strommodulierten Übertragung von Daten zwischen einer Mastereinrichtung und wenigstens einer Slaveeinrichtung, welche über eine Stromschleife miteinander verbunden sind, beschrieben.

Der Erfindung liegt die Aufgabe zugrunde, das bekannte Datenübertragungssystem derart weiterzuentwickeln, dass eine Systemkonfiguration automatisch erkannt werden kann.

Ausgangspunkt der Erfindung ist die ältere Patentanmeldung, gemäß der Daten mittels Modulation eines Ruhestroms über eine Stromschleife übertragen werden können. Das Ruhestromprinzip besagt, dass in einem Ruhezustand, d.h. in einem fehlerfreien Betrieb des Datenübertragungssystems ständig ein vorbestimmter konstanter Ruhestrom durch den Stromkreis fließt. Ein geeignetes Einsatzgebiet für ein solches Kommunikationssystem können industrielle, insbesondere sicherheitsgerichtete Automatisierungsanlagen sein.

Ein Kerngedanke der Erfindung kann darin gesehen werden, eine Slaveeinrichtung mit einer weiteren von einer Auswerte- und Steuereinheit ansteuerbaren Schalteinrichtung auszustatten, welche während einer Systemkonfigurations-Erkennungsphase vorübergehend geschlossen wird und dadurch die Stromschleife kurzschließt und anschließend wieder geöffnet wird.

Das oben genannte technische Problem wird durch die Merkmale des Anspruchs 1 und durch die Merkmale der nebengeordneten Ansprüche 15 bis 17 gelöst.

Die Erfindung wird nachfolgend anhand einiger Ausführungsbeispiele in Verbindung mit den beiliegenden Zeichnungen näher erläutert. Es zeigen:
- Fig. 1: das prinzipielle Blockschaltbild eines Kommunikationssystems mit einer Mastereinrichtung und wenigstens zwei Slaveeinrichtungen,
- Fig. 2: das Blockschaltbild einer beispielhaften, redundant aufgebauten Slaveeinrichtung,
- Fig. 3: das Blockschaltbild einer weiteren beispielhaften, redundant aufgebauten Slaveeinrichtung,
- Fig. 4: das Blockschaltbild einer weiteren beispielhaften, redundant aufgebauten Slaveeinrichtung,
- Fig. 5: das Blockschaltbild einer beispielhaften, redundant aufgebauten Mastereinrichtung,
- Fig. 6: das Blockschaltbild einer weiteren beispielhaften, redundant aufgebauten Mastereinrichtung,
- Fig. 7: ein prinzipieller Schaltungsaufbau einer beispielhaften, in Fig. 1 gezeigten regelbaren Stromquelle,
- Fig. 8a: einen beispielhaften zeitliche Verlauf des geregelten Stroms der Stromquelle,
- Fig. 8b: einen beispielhaften zeitlichen Verlauf des Ausgangsstroms der Stromquelle,
- Fig. 8c: einen beispielhaften Logikzustand der Stromschleife,
- Fig. 8d: den zeitlichen Verlauf der Ausgangsspannung, und
- Fig. 9: das Blockschaltbild einer beispielhaften Slaveeinrichtung mit zwei Optokopplern.

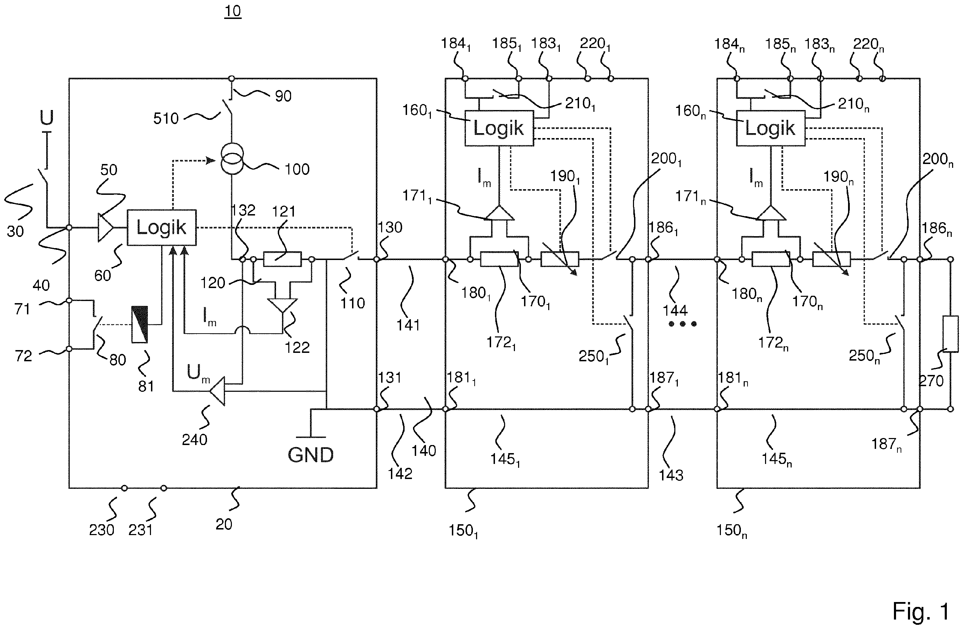

Figur 1 zeigt ein beispielhaftes Kommunikationssystem 10, welches eine strommodulierte Übertragung von Daten von einer Mastereinrichtung 20 zu wenigstens einer Slaveeinrichtung 150₁, 150ₙ und umgekehrt ermöglicht. Die Mastereinrichtung und die Slaveeinrichtungen werden nachfolgen auch kurz als Master bzw. Slave bezeichnet. Das Kommunikationssystem 10 kann beispielsweise Teil einer industriellen Automatisierungsanlage sein. Als Daten können zum Beispiel Steuerdaten, wie zum Beispiel Zustandswechsel-Anforderungssignale oder Abschaltbefehle, Prozessdaten, Parametrierungsdaten, Diagnosedaten, Konfigurationsdaten und/oder sicherheitsrelevante Daten übertragen werden.

Beispielhaft enthält das Kommunikationssystem 10 lediglich zwei in Serie an die Mastereinrichtung 20 angeschlossene Slaveeinrichtungen 150₁ und 150ₙ, wobei die Punkte zwischen den beiden Slaves 150₁ und 150ₙ darauf hinweisen, dass auch mehr als zwei Slaves in Serie mit dem Master verbunden werden können. Das beispielhafte Kommunikationssystem 10 ist somit als Master-Slave-System konzipiert.

Das Kommunikationssystem 10 weist eine Stromschleife 140 auf, an die die Mastereinrichtung 20 und die Slaveeinrichtungen 150₁ und 150ₙ ähnlich einer Kette angeschlossen sind. Die Stromschleife 140 fungiert insbesondere als Datenbus.

Die Energieversorgung des Kommunikationssystems 10 und insbesondere der Master- und Slaveeinrichtungen kann über die Stromschleife oder vorzugsweise über mehrere separate Energieversorgungseinrichtungen, die jedoch nicht Gegenstand der Erfindung sind, erfolgen. Vorzugsweise verfügen der Master 20 und die Slaves 150₁ und 150ₙ jeweils über eine eigene Spannungsversorgung. Beispielsweise weist die Mastereinrichtung 20 Anschlüsse 90, 230 und 231 auf, an welche eine externe Energieversorgungsquelle zur Spannungsversorgung der Mastereinrichtung 20 angeschlossen werden kann. In ähnlicher Weise können an Anschlüsse 220₁ und 220ₙ der Slaveeinrichtung 150₁ bzw. 150ₙ jeweils eine Energieversorgungsquelle zur Spannungsversorgung der jeweiligen Slaveeinrichtung angeschlossen werden.

Die Mastereinrichtung 20 weist zwei Anschlussklemmen bzw. Anschlussports 130 und 131 auf, an die Leitungsabschnitte 141 und 142 der Stromschleife 140 angeschlossen werden können. Die Anschlussklemme 131 ist mit Masse verbunden, während die Anschlussklemme als Signalanschluss fungiert. Wie noch ausgeführt wird, sind die Slaves 150₁ und 150ₙ sowie der Master 20 auf diese Weise jeweils über die beiden Anschlussports 130 und 131 miteinander verbunden.

Die Mastereinrichtung 20 weist ferner eine erste Auswerte- und Steuereinheit 60 auf, die in Figur 1 als Logik bezeichnet ist. Die Auswerte- und Steuereinheit 60 kann einen Mikrocontroller enthalten.

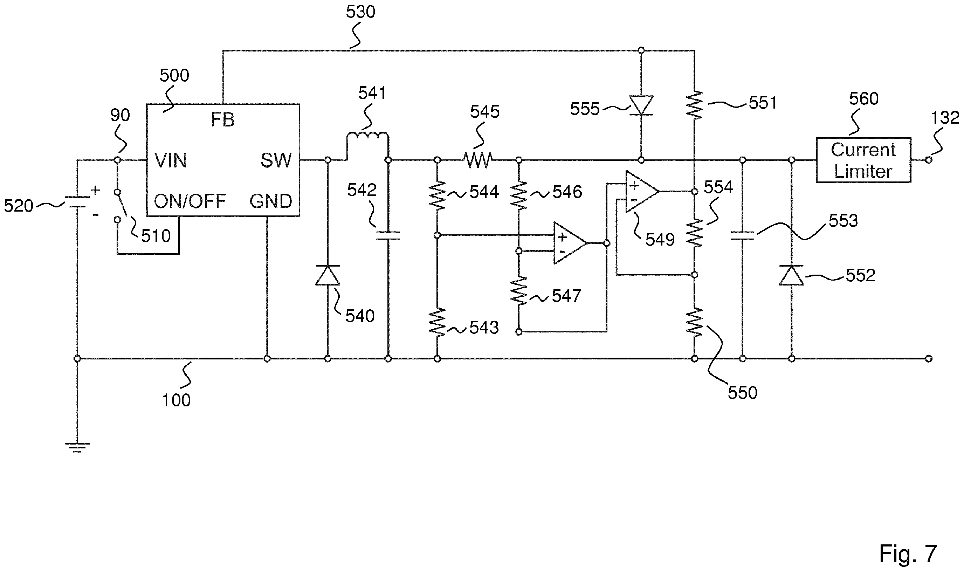

Die Auswerte- und Steuereinheit 60 ist beispielsweise dazu ausgebildet, einen externen Schaltzustand zu erfassen, welcher einen Ruhe- oder Arbeitszustand des Kommunikationssystems 10 signalisiert. Hierzu kann die Mastereinheit 20 einen Eingang 40 aufweisen, an den eine Schalteinrichtung 30 angeschlossen werden kann, welche den externen Schaltzustand liefert. Bei der Schalteinrichtung 30 kann es sich beispielsweise um einen Not-Aus-Schalter handeln. Das von der Schalteinrichtung 30 erzeugte Signal kann über eine Signalaufbereitungseinheit 50 der Auswerte- und Steuereinheit 60 zugeführt werden. Weiterhin enthält die Mastereinrichtung 20 eine an die Stromschleife 140 angeschlossene elektrische Stromquelle 100, welche insbesondere dazu ausgebildet ist, einen konstanten Ruhestrom in die Stromschleife 140 einzuprägen. Je nach Implementierung kann der Pegel des Ruhestroms geregelt oder begrenzt werden. Bei der elektrischen Stromquelle 100 kann es sich um eine spannungsgesteuerte Stromquelle handeln, die je nach Implementierung gegebenenfalls von der Auswerte- und Steuereinheit 60 angesteuert werden kann. Die Steuerspannung kann beispielsweise über eine an den Anschluss 90 anschaltbare Gleichspannungsquelle 520 (in Fig. 7 gezeigt) bereitgestellt werden, die ebenfalls mit Masse verbunden ist.

Eine vorteilhafte regelbare Schaltungsanordnung zur Realisierung der elektrischen Stromquelle ist in Fig. 7 gezeigt.

Die Stromquelle 100 ist eine Konstantstromquelle, die zum Beispiel ein Schaltnetzteil 500 mit einem Regler und einem Abwärtswandler (Step-Down-Converter) aufweist, wobei eine stromgesteuerte Spannungsrückführung 530 an den Rückkopplungseingang FB des Reglers erfolgt. Fig. 7 zeigt die Spannungsquelle 520, welche am Eingang 90 des Masters 20 angeschlossen werden kann. Über einen von der Auswerte- und Steuereinheit 60 ansteuerbaren Schalter 510 und einen ON/OFF-Eingang kann das Schaltnetzteil 500 ein- oder ausgeschaltet werden. Im fehlerhaften Betrieb kann das Schaltnetzteil 500 abgeschaltet werden; es muss aber nicht abgeschaltet werden. Mit anderen Worten: Wird die Stromschleife 140 kurzzeitig oder für eine längere Zeitspanne unterbrochen, muss das Schaltnetzteil 500 nicht abgeschaltet werden. Ein durch kurzeitiges Unterbrechen der Stromschleife bedingtes Anwachsen der Spannung an den Anschlüssen 131 und 132 des Masters 20 wird durch die in Fig. 7 gezeigte Schaltungsanordnung ausgeregelt.

Zur stromgesteuerten Spannungsrückführung ist am Ausgang SW des Schaltnetzteils 500 eine PI-Schaltung mit einer Diode 540, einer Spule 541 und einem Kondensator 542 angeschlossen. Der Anodenanschluss der Diode 540 ist mit Masse verbunden, während der Kathodenanschluss mit dem Ausgang SW des Schaltnetzteils 500 verbunden ist. Parallel zum Kondensator 542 ist ein erster Spannungsteiler mit Widerständen 543 und 544 geschaltet. Die Mittelanzapfung des Spannungsteilers ist mit dem nicht invertierenden Eingang eines Komparators 548 verbunden, während ein Anschluss des Widerstands 543 mit Masse und ein Anschluss des Widerstands 544 mit der Spule 541 verbunden ist. Der andere Anschluss der Spule 541 ist mit dem Ausgang SW des Schaltnetzteils 500 verbunden. Ein weiterer Spannungsteiler mit Widerständen 546 und 547 ist vorgesehen, dessen Mittelanzapfung mit dem invertierenden Eingang des Komparators 548 verbunden ist. Ein Anschluss des Widerstands 547 ist mit dem Ausgang des Komparators 548 verbunden, der wiederum mit einem nicht invertierenden Eingang eines weiteren Komparators 549 verbunden ist. Ein Längswiderstand 545 ist an einen Anschluss der Spule 541 und einen Anschluss des Widerstands 546 angeschlossen. Ein weiterer Spannungsteiler umfasst drei Widerstände 550, 551 und 554. Ein Anschluss des Widerstands 551 ist mit dem FB-Eingang des Schaltnetzteils 500 verbunden; er bildet somit einen Teil der stromgesteuerten Spannungsrückführung 530. Der andere Anschluss des Widerstands 551 ist mit dem Ausgang des weiteren Komparators 549 verbunden. Der Anodenanschluss einer Zenerdiode 555 kann zur Spannungsbegrenzung an den Rückkopplungseingang FB angeschlossen sein, während der Kathodenanschluss der Zenerdiode 555 mit dem Längswiderstand 545 verbunden ist. Der Widerstand 554 ist mit dem Ausgang des weiteren Komparators 549 und dessen invertierenden Eingang verbunden. Ein Anschluss des Widerstands 550 ist mit dem invertierenden Eingang des Komparators 549 und mit Masse verbunden. Zwischen Kathodenanschluss der Zenerdiode 555 und Masse kann ein Kondensator 553 und eine weitere Zenerdiode 552 zur Spannungsbegrenzung angeschlossen sein, wobei der Anodenanschluss der Zenerdiode 552 mit Masse verbunden ist. Zwischen Kathodenanschluss der Zenerdiode 552 und Anschlusspunkt 132 kann ein Strombegrenzer 560 angeschlossen sein.

Ferner weist die Mastereinrichtung 20 eine in die Stromschleife 140 geschaltete von der Auswerte- und Steuereinheit 60 ansteuerbare Schalteinrichtung 110 auf. Die Schalteinrichtung 110 ist zum Beispiel dazu ausgebildet ist, die Stromschleife 140 zu schließen oder zu unterbrechen, um auf diese Weise den von der Stromquelle 100 in die Stromschleife 140 eingeprägten Ruhestrom zur Übertragung von Informationen zu modulieren, d.h. ein- und auszuschalten.

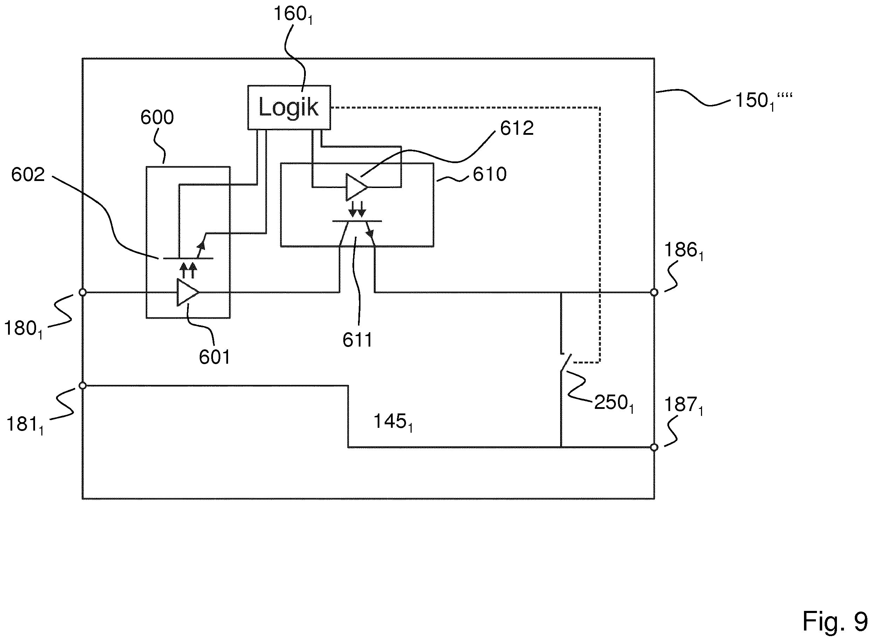

Weiterhin enthält die Mastereinrichtung 20 eine in die Stromschleife 140 geschaltete Stromerfassungseinrichtung 120, welche mit der Auswerte- und Steuereinheit 60 verbunden ist. Die Auswerte- und Steuereinheit 60 ist dazu ausgebildet, den von der Stromerfassungseinrichtung 120 gemessenen Strom Im auszuwerten. Die Auswerte- und Steuereinheit 60 kann ferner dazu ausgebildet sein, in Abhängigkeit von dem Auswerteergebnis zum Beispiel die Ausführung einer definierten Aktion zu veranlassen. Die Stromerfassungseinrichtung 120 kann durch einen in die Stromschleife geschalteten Widerstand 121 und einen an den Widerstand 121 angeschlossenen Differenzverstärker 122 realisiert werden. Der Ausgang des Differenzverstärkers 122 ist mit einem Eingang der Auswerte- und Steuereinheit 60 verbunden. Der Differenzverstärker 122 misst in an sich bekannter Weise die über den Messwiderstand 121 abfallende Spannung, welche proportional zu dem durch die Stromschleife 140 fließenden Strom ist. Alternativ kann auch ein Optokoppler als Stromerfassungseinrichtung 120 verwendet werden, wie er beispielhaft in Fig. 9 i. V. m. einer Slaveeinrichtung 150₁‴ als Baustein 600 gezeigt ist.

Die Mastereinrichtung 20 kann wenigstens einen von der ersten Auswerte- und Steuereinheit 60 ansteuerbaren Ausgang aufweisen, welcher in Fig. 1 durch Ausgangsklemmen 71 und 72 dargestellt ist. Der Ausgang kann durch eine durch die Auswerte- und Steuereinheit 60 ansteuerbare Schalteinrichtung, insbesondere ein Relais realisiert sein, welches in der Figur 1 durch einen Schalter 80 und eine Erregerspule 81 symbolisiert ist. Die Erregerspule 81 kann von einer Spannungsquelle gespeist werden, die zum Beispiel an die Anschlussklemmen 230 und 231 angeschlossen ist. An die Ausgangsklemmen 71 und 72 kann ein Aktor (nicht dargestellt) angeschlossen werden. Bei dem Aktor kann es sich um eine Maschine, ein Maschinenteil, beispielsweise einen Roboter einer Automatisierungsanlage handeln, der bei Anforderung oder im Fehlerfall sicher abgeschaltet werden muss.

Weiterhin kann der Master 20 eine Spannungsmesseinrichtung 240 aufweisen, die an den Eingang der Stromschleife 140, d.h. an den Anschlusspunkt 132 und den Masseanschluss 131, angeschlossen ist. Der Ausgang der Spannungsmesseinrichtung 240 ist mit der Auswerte- und Steuereinheit 60 verbunden. In diesem Fall ist die Auswerte- und Steuereinheit 60 ferner dazu ausgebildet, die von der Spannungsmesseinrichtung 240 gemessene Spannung Um auszuwerten und vorzugsweise in Abhängigkeit vom Auswerteergebnis die Ausführung einer definierten Aktion zu veranlassen. Auf diese Weise kann der Master 20 zum Beispiel einen Querschluss in der Stromschleife 140 erkennen und gegebenenfalls veranlassen, dass das gesamte Kommunikationssystem 10 abgeschaltet wird.

Nunmehr wird der Aufbau der in Fig. 1 gezeigten Slaveeinrichtungen 150₁ und 150ₙ näher erläutert, wobei angenommen wird, dass die gezeigten Slaveeinrichtungen im Wesentlichen gleich aufgebaut sein können. Auch können die Slaveeinrichtungen 150₁ und 150ₙ gleiche Funktionen ausführen. Dies wird durch Verwendung der gleichen Bezugszeichen angedeutet, die sich nur im Index unterscheiden. Demzufolge wird der Aufbau nur hinsichtlich der Slaveeinrichtung 150₁ beschrieben.

Die Slaveeinrichtung 150₁ weist zwei Anschlussports 180₁ und 181₁ auf, an die die Leiterabschnitte 141 und 142 der Stromschleife 140 angeschlossen werden können. Auf diese Weise wird die Slaveeinrichtung 150₁ mit den Anschlussports 130 und 131 der Mastereinrichtung 20 verbunden. Über zwei Anschlussports 186₁ und 187₁ wird die Slaveeinrichtung 150₁ an Leiterabschnitte 143 und 144 der Stromschleife 140 und somit an die beiden korrespondierenden Anschlussports 180ₙ und 181ₙ der Slaveeinrichtung 150ₙ angeschlossen. Die Anschlussports 180₁ und 181₁ sind intern über einen Leiterabschnitt 145₁ verbunden, der als Teil der Stromschleife 140 betrachtet werden kann. Angemerkt sei, dass der Leiterabschnitt 142 und der Leiterabschnitt 145₁ der Slaveeinrichtung 150₁ Teile des Rückflusspfads der Stromschleife 140 bilden.

Ferner enthält die Slaveeinrichtung 150₁ eine Auswerte- und Steuereinheit 160₁, welche auch als zweite Auswerte- und Steuereinheit 160₁ bezeichnet werden kann. Auch die Auswerte- und Steuereinheit 160₁ kann durch einen Mikrocontroller realisiert werden.

Optional kann die Slaveeinrichtung 150₁ eine in die Stromschleife 140 geschaltete Spannungsmodulationseinrichtung 190₁ aufweisen, welche dazu ausgebildet ist, den Gesamtwiderstand der Stromschleife 140 in Abhängigkeit von einem Steuersignal, welches von der zweiten Auswerte- und Steuereinheit 160₁ bereitgestellt wird, zu modulieren, um Daten zur Slaveeinrichtung 150ₙ und/oder zur Mastereinrichtung 20 über die Stromschleife 140 zu übertragen. Die Spannungsmodulationseinrichtung 190₁ kann durch einen von der Auswerte- und Steuereinheit 160₁ gesteuerten beziehungsweise einstellbaren elektrischen Widerstand oder eine steuerbare Impedanz realisiert werden. Die Veränderung des Gesamtwiderstands der Stromschleife 140 und die damit einhergehende Spannungsänderung am Eingang der Stromschleife 140 kann von der Spannungsmesseinrichtung 240 gemessen und von der Auswerte- und Steuereinheit 60 des Masters 20 ausgewertet werden. Je nach Implementierung kann die Auswerte- und Steuereinheit 60 dann in Abhängigkeit vom Auswerteergebnis die Durchführung einer definierten Aktion veranlassen.

Die Slaveeinrichtung 150₁ weist ferner eine in die Stromschleife 140 geschaltete Stromerfassungseinrichtung 170₁ auf, welche mit der zweiten Auswerte- und Steuereinheit 160₁ verbunden ist. Die Stromerfassungseinrichtung 170₁ kann einen in die Stromschleife 140 geschalteten Messwiderstand 172₁ aufweisen, wobei die über den Messwiderstand 172₁ abfallende Spannung mittels eines Differenzverstärkers 171₁ abgegriffen wird. Der Ausgang des Differenzverstärkers 171₁ ist mit der Auswerte- und Steuereinheit 160₁ verbunden.

Die Auswerte- und Steuereinheit 160₁ der Slaveeinrichtung 150₁ ist dazu ausgebildet, den von der Stromerfassungseinrichtung 170₁ gemessenen Strom Im auszuwerten. Je nach Implementierung kann die Auswerte- und Steuereinheit 160₁ in Abhängigkeit von dem Auswerteergebnis die Ausführung einer definierten Aktion veranlassen.

Alternativ kann die Stromerfassungseinrichtung 170₁ auch durch einen Optokoppler 600 realisiert werden, wie in Fig. 9 gezeigt ist. Der Optokoppler 600 weist einen optischen Sender, 601 auf, der beispielsweise eine LED-Diode ist, die zwischen den Anschlüssen 180₁ und 186₁ der Slaveeinrichtung 150₁ angeschlossen ist. Als optischer Empfänger 602 kann ein Fototransistor verwendet werden. Der Fototransistor 602 liefert nunmehr einen Strom für die Auswerte- und Steuereinheit 160₁, der abhängig ist vom Strom in der Stromschleife 140.

Um Informationen - wie zum Beispiel die Adresse der Slaveeinrichtung 150₁, ein Zustandswechsel-Anforderungssignal (Abschaltbefehl) oder eine Zustandsinformation - strommoduliert zur Slaveeinrichtung 150ₙ und/oder zum Master 20 übertragen zu können, weist die Slaveeinrichtung 150₁ eine in die Stromschleife 140 geschaltete Schalteinrichtung 200₁ - auch zweite Schalteinrichtung genannt - auf, welche unter Ansprechen auf ein Steuersignal der Auswerte- und Steuereinheit 160₁ geöffnet und geschlossen werden kann. Auf diese Weise kann die Stromschleife 140 gezielt von der Slaveeinrichtung 150₁ unterbrochen werden. Die zeitliche Länge einer Unterbrechung der Stromschleife 140 kann von der zu übertragenen Information abhängen, die der Auswerte- und Steuereinheit 160₁ bekannt ist. Ist die Spannungsmodulationseinrichtung 190₁ vorhanden, kann die Schalteinrichtung 200₁ zwischen der Spannungsmodulationseirichtung 190₁ und dem Anschlussport 186₁ angeschlossen werden.

Um vorzugsweise die Konfiguration des Kommunikationssystems 10 automatisch erkennen zu können, weist die Slaveeinrichtung 150₁ eine weitere von der Auswerte- und Steuereinheit 160₁ ansteuerbare Schalteinrichtung 250₁ - auch als dritte Schalteinrichtung bezeichnet - auf, die dazu ausgebildet ist, im geschlossenen Zustand die Stromschleife 140 kurzzuschließen. Hierzu kann die Schalteinrichtung 250₁ direkt an die Anschlussports 186₁ und 187₁ angeschlossen sein.

Die Auswerte- und Steuereinheit 160₁ ist dazu ausgebildet, die Schalteinrichtung 250₁ während einer Systemkonfigurations-Erkennungsphase vorübergehend zu schließen und anschließend wieder zu öffnen. Die zeitliche Dauer, während der die Schalteinrichtung 250₁ geschlossen ist, kann zum Beispiel fest vorgegeben oder ereignisgesteuert sein. Die Systemkonfigurations-Erkennungsphase kann auch als Slave-Aufschaltmodus, Slave-Einschleifmodus oder Teachingmodus betrachtet werden, der vorzugsweise von der Auswerte- und Steuereinheit 60 des Masters 20 eingeleitet wird. Die Funktionsweise der Systemkonfigurations-Erkennungsphase wird später noch detailliert erläutert.

Die Auswerte- und Steuereinheit 60 des Masters 20 ist dazu ausgebildet, ein Aufschalten der Slaveeinrichtung 150₁ und jeder weiteren an die Stromschleife 140 angeschlossene Slaveeinrichtung 150ₙ zu erkennen. Beispielsweise erkennt die Auswerte- und Steuereinheit 60 das Aufschalten des Slaves 150₁ am Öffnen der Schalteinrichtung 250₁, wodurch der Gesamtwiderstand der Stromschleife 140 erhöht wird. Die dadurch verursachte Spannungsänderung am Eingang 131, 132 der Stromschleife 140 wird von der Spannungsmesseinrichtung 240 gemessen und kann von der Auswerte- und Steuereinheit 60 als Aufschalten eines Slaves interpretiert werden.

Die Slaveeinrichtung 150₁ kann wenigstens einen durch die zweite Auswerte- und Steuereinheit 160₁ ansteuerbaren zweiten Ausgang aufweisen, der durch Ausgangsklemmen 184₁ und 185₁ dargestellt ist. Symbolisch ist der ansteuerbare Ausgang durch einen Schalter 210₁ realisiert, der beispielsweise als Relais ausgebildet ist. An die Ausgangsanschlüsse 184₁ und 185₁ kann wiederum ein Aktor, beispielsweise ein Roboter, eine Maschine oder ähnliches angeschlossen werden.

Alternativ oder zusätzlich kann die Slaveeinrichtung 150₁ wenigstens einen Eingang aufweisen, der symbolisch durch einen Eingangsanschluss 183 dargestellt ist. An den Eingang kann ein Sensor, beispielsweise ein Positionsschalter, ein Lichtgitter und dergleichen angeschlossen werden, welche einen Prozess überwachen können. Ein derart implementierter Slave fungiert als I/O-Teilnehmer des Kommunikationssystems 10.

Angemerkt sei, dass die Stromschleife 140 mit einer Abschlusseinrichtung 270, vorzugsweise einem elektrischen Widerstand definierter Größe abgeschlossen ist. Bildet die Slaveeinrichtung 150ₙ, wie in Fig. 1 gezeigt, den letzten Teilnehmer in der Stromschleife 140, so wird die Abschlusseinrichtung 270 an die Anschlussports 186ₙ und 187ₙ der Slaveeinrichtung 150ₙ direkt angeschlossen. Der Rückflusspfad der Stromschleife 140 enthält in diesem Fall noch den zwischen den Anschlussports 181ₙ und 187ₙ verlaufenden Leiterabschnitt 145ₙ.

Damit das in Figur 1 gezeigte Kommunikationssystem in einer sicherheitsgerichteten Anwendung eingesetzt werden kann, ist es zweckmäßig, die Mastereinrichtung 20 und zumindest einige der Slaveeinrichtungen als sicherheitsgerichtete Teilnehmer auszubilden. Einige Ausführungsbeispiele werden nachfolgend erläutert.

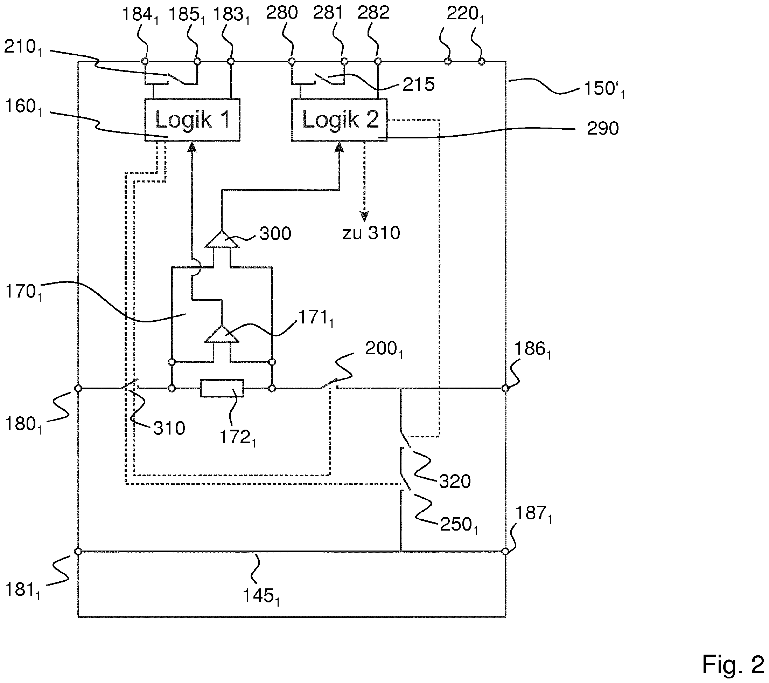

Figur 2 zeigt ein erstes Beispiel einer redundant aufgebauten Slaveeinrichtung 150₁'.

Sie enthält mit Ausnahme der nur optional vorgesehenen Spannungsmodulationseinrichtung 190₁ alle Komponenten der Slaveeinrichtung 150₁.

Ferner weist die Slaveeinrichtung 150'₁ eine weitere Auswerte- und Steuereinheit 290 auf, die auch als Logik 2 bezeichnet wird. Die Slaveeinrichtung 150'₁ kann einen zweiten Ausgang 280, 281 aufweisen, der von der Auswerte- und Steuereinheit 290 ansteuerbar ist. Dies wird schalttechnisch durch eine Schalteinrichtung 215 zwischen den beiden Ausgangsanschlüssen 280 und 181 angedeutet. Die Schalteinrichtung 215 kann ähnlich der Schalteinrichtung 210₁ als Relais ausgebildet sein. Bereits an dieser Stelle sei angemerkt, dass ein Aktor, beispielsweise ein Maschinenteil, an den ersten Ausgang 184, 185 und den zweiten Ausgang 280 und 281 angeschlossen werden kann. Nur wenn beide Schalteinrichtungen 210 und 215 geschlossen sind, ist das Maschinenteil betriebsbereit. Wird einer der beiden Schalteinrichtungen 210 und 215 geöffnet, wird das Maschinenteil abgeschaltete. Ein weiterer Eingang 282 kann vorgesehen sein, der mit der Auswerte- und Steuereinheit 290 verbunden ist. Wie an den Eingang 183₁ kann auch an den zweiten Eingang 282 ein Sensor, beispielsweise ein Notaus-Schalter, angeschlossen werden.

Die redundant aufgebaute Slaveeinrichtung 150'₁ weist ferner eine zweite Stromerfassungseinrichtung 300 auf, die beispielsweise aus einem Differenzverstärker aufgebaut ist, der mit dem Messwiderstand 172₁ verbunden ist. Der Ausgang des Differenzverstärkers der zweiten Stromerfassungseinrichtung 300 ist mit der zweiten Auswerte- und Steuereinheit 290 verbunden.

In dem Hinlaufpfad der Stromschleife 140, die sich zwischen den Anschlussports 180₁ und 186₁ erstreckt ist eine weitere Schalteinrichtung 310 vorgesehen, die von der zweiten Auswerte- und Steuereinheit 290 angesteuert wird. Beispielsweise ist die weitere Schalteinrichtung 310 zwischen dem Anschlussport 180₁ und dem Messwiderstand 172₁ in die Stromschleife eingeschleift. Die Schalteinrichtung 310 wird von der Auswerte- und Steuereinheit 290 geöffnet und geschlossen, um Strommoduliert Daten zu übertragen.

Eine weitere Schalteinrichtung 320 ist in Reihe geschaltet mit der Schalteinrichtung 250₁, um die Stromschleife 140, insbesondere während einer Systemkonfigurations-Erkennungsphase kurzzuschließen. Die Schalteinrichtung 320 wird von der zweiten Auswerte- und Steuereinheit 290 angesteuert. Nur wenn die beiden Schalteinrichtungen 250₁ und 320 geschlossen sind, wird die Stromschleife 140 bezüglich der Slaveeinrichtung 150'₁ kurzgeschlossen. Angemerkt sei, dass die Schalteinrichtungen 250₁ und 320 auch parallel geschaltet sein können. Ferner kann auch einer der beiden Schalteinrichtungen entfallen.

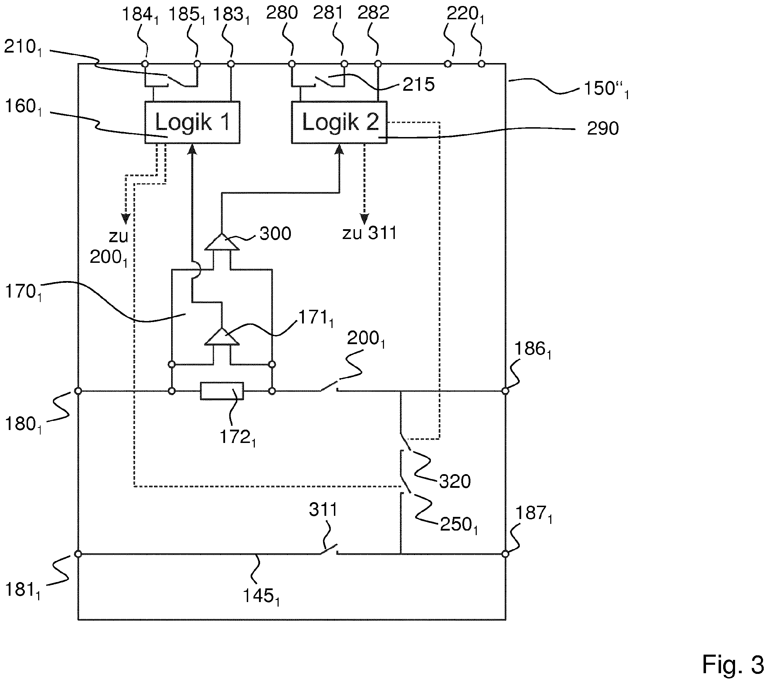

In Figur 3 ist ein weiteres Beispiel einer redundant aufgebaute Slaveeinrichtung 150"₁ gezeigt. Sie unterscheidet sich von der in Figur 2 gezeigten redundanten Slaveeinrichtung 150'₁ lediglich dadurch, dass die Schalteinrichtung 310 nicht in den Hinlaufpfad der Stromschleife 140, sondern als Schalteinrichtung 311 in den Rücklaufpfad 145₁ eingeschleift ist.

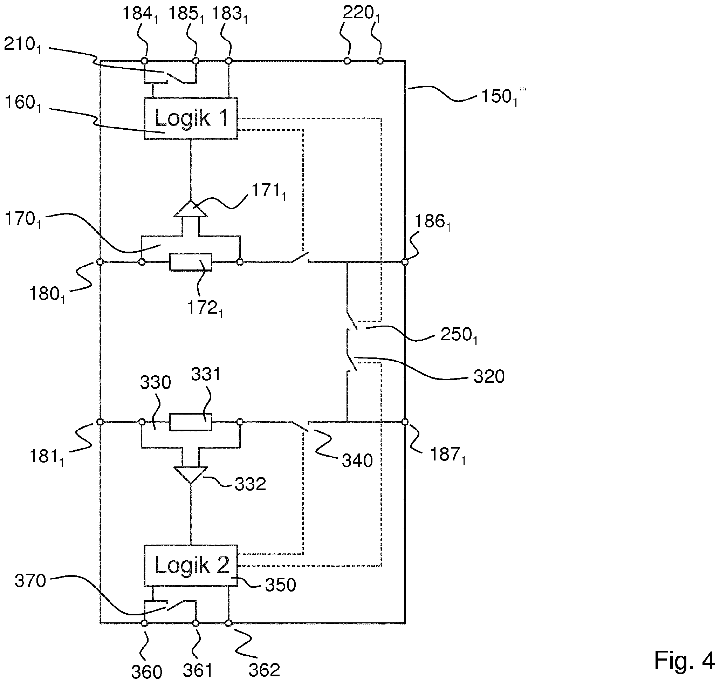

In Figur 4 ist ein weiteres Beispiel einer redundant ausgebildeten Slaveeinrichtung 150‴₁ dargestellt. Sie enthält wiederum die Komponenten der Slaveeinrichtung 150₁.

Der wesentliche Unterschied zwischen den Slaveeinrichtungen 150₁' und 150"₁ und der in Figur 4 gezeigten Slaveeinrichtung ist darin zusehen, dass eine weitere Stromerfassungseinrichtung 330 nicht im Hinlaufpfad, sondern im Rücklaufpfad der Stromschleife 140 eingeschleift ist.

Die redundante Stromerfassungseinrichtung 330 kann wiederum einen Messwiderstand 331 und einen Differenzverstärker 332 aufweisen, dessen Ausgang mit einer redundanten Auswerte- und Steuereinheit 350 verbunden. Der Messwiderstand 331 ist zwischen die Anschlussports 181₁ und 187₁ in den Hinlaufpfad der Stromschleife 140 geschaltet.

Eine weitere Schalteinrichtung 340 ist zwischen den Messwiderstand 331 und den Anschlussport 187₁ geschaltet. Die Schalteinrichtung 340 ist redundant zur Schalteinrichtung 201 vorgesehen und dient dem gleichen Zweck, nämlich beispielsweise Daten strommoduliert über die Stromschleife zu übertragen. Der Schalter 340 wird von der Auswerte- und Steuereinheit 350 angesteuert. Die Auswerte- und Steuereinheit 350 steuert ebenfalls eine Schalteinrichtung 320, die in Reihe mit der Schalteinrichtung 250₁ geschaltet ist.

Die Slaveeinrichtung 150‴₁ weist ähnlich den zuvor in Figur 2 und 3 gezeigten Varianten einen weiteren Ausgang 360, 361 auf, der von der Auswerte- und Steuereinheit 350 ansteuerbar ist. Symbolisch ist dies durch eine Schalteinrichtung 370 dargestellt, die wiederum als Relais ausgebildet sein kann. Angemerkt sei, dass ein Aktor (nicht gezeigt) sowohl an den ersten Eingang 184₁, 185₁ als auch an den zweiten Eingang 360, 361 angeschlossen ist. Ein weiterer Eingang 362 kann vorgesehen sein, an den wiederum ein Sensor angeschlossen werden kann. Der weitere Ausgang 360, 361 und der weitere Eingang 362 sind mit der Auswerte- und Steuereinheit 350 verbunden.

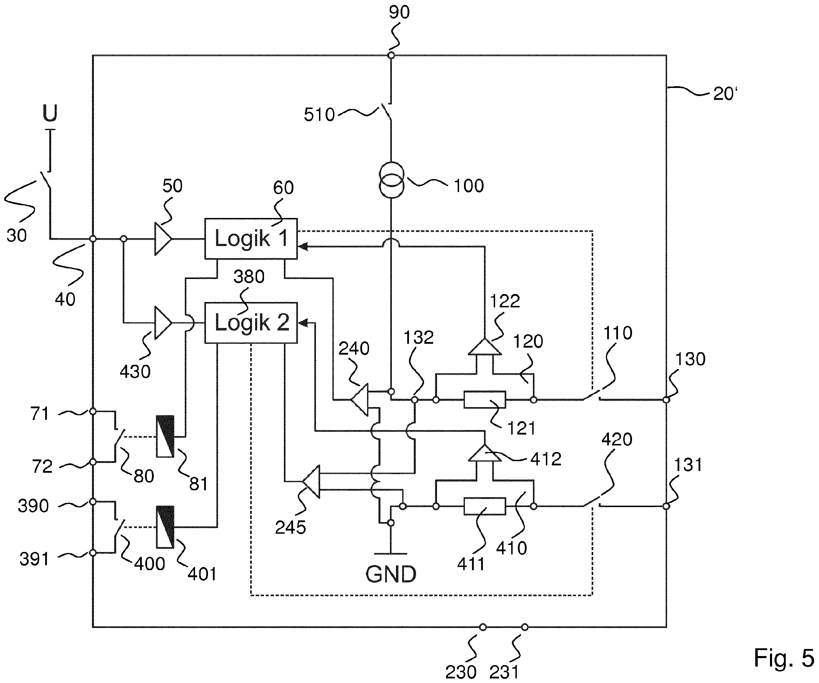

Figur 5 zeigt ein Beispiel einer redundant aufgebauten Mastereinrichtung 20', die die Komponenten der in Figur 1 gezeigten Mastereinrichtung 20 enthält. Darüber hinaus weist sie weitere Komponenten auf.

Insbesondere weist die Mastereinrichtung 20` eine redundante Stromerfassungseinrichtung 410 und eine redundante Schalteinrichtung 420 auf, die in dem Rückflusspfad der Stromschleife 140 eingeschleift sind. Die Stromerfassungseinrichtung 410 kann wie die Stromerfassungseinrichtung 120 einen Messwiderstand 411 und einen Differenzverstärker 412 aufweisen. Der Messwiderstand 411 ist in Reihe mit der redundanten Schalteinrichtung 420 zwischen Masse und dem Anschlussport 131 geschaltet. Der Ausgang des Differenzverstärkers 412 ist mit einer zweiten Auswerte- und Steuereinheit 380 verbunden. Ein Eingang der Auswerte- und Steuereinheit 380 kann ähnlich der ersten Logik 60 über eine Signalaufbereitungseinrichtung 430 mit dem Eingang 40 verbunden sein, an dem beispielsweise der Notausschalter 30 angeschlossen ist. Die Schalteinrichtung 420 ist von der Auswerte- und Steuereinheit 380 ansteuerbar, um Daten mittels Modulation des durch die Stromquelle 100 eingeprägten Ruhestroms zu modulieren.

Die Mastereinrichtung 20' kann einen weiteren Ausgang 390, 391 aufweisen, der intern beispielsweise mit einem Relais verbunden ist. Das Relais ist schematisch durch eine Schalteinrichtung 400 und eine Spuleneinrichtung 401 dargestellt, die wiederum von der redundanten Auswerte- und Steuereinheit 380 angesteuert werden kann. Ein sicherheitsgerichteter Aktor kann an den ersten Ausgang 71, 72 und an den zweiten Ausgang 390, 391 angeschlossen werden. Nur wenn beide Ausgänge geschlossen sind, d. h. aktiviert sind, kann der Aktor betrieben werden. Ist einer der Ausgänge geöffnet bzw. deaktiviert, wird der Aktor abgeschaltet.

Vorzugsweise kann eine zweite Spannungsmesseinrichtung 245 an den Anschlusspunkt 132 und an Masse angeschlossen sein. Der Ausgang der Spannungsmesseinrichtung 245 ist wiederum mit der redundanten Auswerte- und Steuereinheit 380 verbunden. Vorteilhafterweise können die beiden Auswerte- und Steuereinheiten 60 und 380 miteinander kommunizieren, um beispielsweise die gemessenen Spannungen zu vergleichen. Weichen die von den Spannungsmesseinrichtungen 240 245 gemessenen Spannungen ab, kann die Mastereinrichtung 20` zum Beispiel das Abschalten des Kommunikationssystems veranlassen.

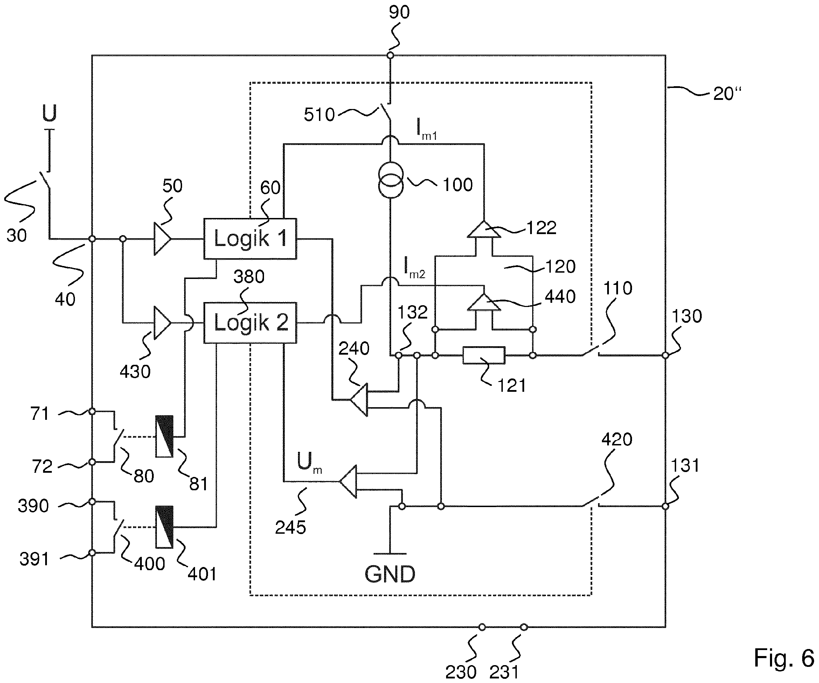

Figur 6 zeigt ein weiteres Beispiel einer redundant aufgebauten Mastereinrichtung 20" die sich von der in Figur 5 gezeigten Mastereinrichtung 20` dadurch unterscheidet, dass eine redundante Stromerfassungseinrichtung 440 wie die erste Stromerfassungseinrichtung 120 im Hinlaufpfad der Stromschleife 140 eingeschleift ist.

Die redundante Stromerfassungseinrichtung 440 weist einen Differenzverstärker auf, der an den bereits vorhandenen Messwiderstand 121 angeschlossen sein kann. Das Ausgangssignal des Differenzverstärkers der redundanten Stromerfassungseinrichtung 440 wird der zweiten Auswerte- und Steuereinheit 380 zugefügt.

Angemerkt sei an dieser Stelle, dass die in den Figuren 5 und 6 gezeigte redundante Stromerfassungseinrichtung 410 beziehungsweise 440 auch als Optokoppler ausgebildet sein kann.

Figur 9 zeigt die bereits erwähnte beispielhafte Slaveeinrichtung 150ʺʺ₁, die sich von der in Figur 1 gezeigten Slaveeinrichtung 150₁ dadurch unterscheidet, dass die im Hinlaufpfad eingeschleifte Schalteinrichtung 200₁ durch einen Optokoppler 610 und die in Figur 1 gezeigte Stromerfassungseinrichtung 170₁ durch den Stromkoppler 600 ersetzt worden ist.

Der als Schalteinrichtung fungierende Optokoppler 610 weist als optischen Sender beispielsweise eine LED-Diode 612 auf, die an den Ausgang der Auswerte- und Steuereinheit 160₁ angeschlossen ist. Als optischer Empfänger kann ein Fototransistor 612 verwendet werden, dessen Emitter-Kollektorstrecke sich im Hinlaufpfad der Stromschleife 140 befindet.

Nachfolgend wird die Funktionsweise des in Figur 1 gezeigten beispielhaften Kommunikationssystems 10 näher erläutert.

Angenommen wird zunächst, dass ein ordnungsgemäßer Betrieb des Kommunikationssystems 10 vorliegt, d. h. der Schalter 30, der Schalter 510, Schalteinrichtung 110 der Mastereinrichtung 20 und die Schalteinrichtungen 200₁ und 200ₙ der beiden Slaveeinrichtungen 150₁ und 150ₙ sind geschlossen, während die Schalteinrichtungen 250₁ und 250ₙ geöffnet sind. Die im Detail in Figur 7 gezeigte Stromquelle 100 prägt folglich einen konstanten Ruhestrom in die geschlossene Stromschleife 140 ein. Die Stromerfassungseinrichtungen 120, 170₁ und 170ₙ messen somit alle den gleichen Ruhestrom, der von den jeweiligen Auswerte- und Steuereinheiten 60, 160₁ und 160ₙ jeweils als ordnungsgemäßer Betrieb interpretiert wird. Daten können im Betrieb zwischen dem Master 20 und den Slaves 150₁ und 150ₙ ausgetauscht werden, indem der Master 20 die Schalteinrichtung 110, die Slaveeinrichtung 150₁ die Schalteinrichtung 200₁ oder die Slaveeinrichtung 150ₙ die Schalteinrichtung 200ₙ in Abhängigkeit von einem implementierten Kommunikationsprotokoll öffnet und dann wieder schließt. Auf diese Weise können in den konstanten Ruhestrom Strompulse definierter Länge eingeprägt werden. Die Stromerfassungseinrichtungen 120, 170₁ und 170ₙ sind jeweils dazu ausgebildet, einen solchen modulierten Ruhestrom zu erfassen. Die Auswertung des modulierten Ruhestroms erfolgt dann in den Auswerte- und Steuereinheiten 60, 160₁ und 160ₙ. Auf diese Weise können zum Beispiel Adressen, Prozessdaten, Konfigurationsdaten, Steuerbefehle und dergleichen zwischen den Teilnehmern ausgetauscht werden.

Nunmehr sei angenommen, dass der am Eingang 183₁ der Slaveeinrichtung 150₁ angeschlossene Not-Ausschalter von einer Bedienperson betätigt worden ist. Die Auswerte-Steuereinheit 160₁ der Slaveeinrichtung 150₁ interpretiert Betätigung des Notausschalters 183₁ als einen kritischen Zustand, woraufhin die Auswerte- und Steuereinheit 160₁ die Schalteinrichtung 200₁ veranlasst, die Stromschleife 140 zur Erzeugung eines Zustandswechsel-Anforderungssignals für eine definierte Zeitdauer zu unterbrechen. Das Zustandswechsel-Anforderungssignal signalisiert zum Beispiel, dass ein sicherer Zustand, zum Beispiel das Abschalten bestimmter Aktoren verlangt worden ist. Je nach Implementierung kann die Auswert- und Steuereinheit 160₁ unter Ansprechen auf die Betätigung des Not-Ausschalters den Ausgang 184₁, 185₁ sofort oder zum Beispiel durch Aufforderung des Masters 20 in einen sicheren Zustand überführen, indem der Schalter 210₁ geöffnet wird. Auf diese Weise kann ein an den Ausgang angeschlossener Aktor abgeschaltet werden.

Angemerkt sei an dieser Stelle, dass auch die Auswerte- und Steuereinheit 60 des Masters 20 die Schalteinrichtung 110 zur Erzeugung eines Zustandswechsel-Anforderungssignals ansteuern kann. Auch die Auswerte- und Steuereinheit 160ₙ kann dazu ausgebildet sein, die Schalteinrichtung 200ₙ des Slaves 150ₙ zur Erzeugung eines Zustandswechsel-Anforderungssignals entsprechend anzusteuern.

Die Unterbrechung der Stromschleife 140 durch das Öffnen der Schalteinrichtung 200₁ unterbricht auch den Stromfluss durch die Stromschleife, d.h. es wird sozusagen ein Stromimpuls definierter Länge aus dem konstanten Ruhestrom ausgeschnitten. Dieser "negative" Stromimpuls definierter Länge wird von der Stromerfassungseinrichtung 171ₙ der Slaveeinrichtung 150ₙ und der Stromerfassungseinrichtung 120 des Masters 20 erfasst und von der entsprechenden Auswerte- und Steuereinheit 60 bzw. 160ₙ als Zustandswechsel-Anforderungssignal interpretiert. Unter Ansprechen auf das erkannte Zustandswechsel-Anforderungssignal sorgt die Auswerte- und Steuereinheit 60 des Masters 20 dafür, dass der Ausgang 71, 72 in einen sicheren Zustand überführt wird. Dies wird beispielsweise dadurch erreicht, dass das Relais 80, 81 geöffnet wird. In ähnlicher Weise sorgt die Auswerte- und Steuereinheit 160ₙ dafür, dass der Ausgang 184₁, 185₁ des Slaves 150ₙ in einen sicheren Zustand überführt wird, indem beispielsweise die Schalteinrichtung 210ₙ geöffnet wird. Sind die Ausgänge als Halbleiterausgänge ausgebildet sind, so bedeutet ein sicherer Zustand, dass die Halbleiterausgänge in einem Low-Zustand gesetzt werden.

Je nach Implementierung können die Auswerte- und Steuereinheiten 60, 160₁ und 160ₙ, nachdem sie ein Zustandswechsel-Anforderungssignal erkannt haben, die Schalteinrichtung 110, die Schalteinrichtung 200₁ bzw. die Schalteinrichtung 200ₙ öffnen. Die Slaveeinrichtungen können zusätzlich die Schalteinrichtung 250₁ bzw. 250ₙ schließen. Hierdurch kann das Kommunikationssystem 10 zuverlässig im sicheren Zustand gehalten werden. Mit anderen Worten: Es ist verriegelt. Ein unerwünschtes Rücksetzen in den Betriebszustand wird somit verhindert. Vorteilhafterweise könnte nunmehr ein Einschleifmodus, auch Systemkonfigurations-Erkennungsphase, von der Mastereinrichtung 20 eingeleitet werden, mit dem insbesondere in Erfahrung gebracht werden kann, welcher Teilnehmer ein Zustandswechsel-Anforderungssignal erzeugt hat.

Denkbar ist auch ein Szenario, bei dem, sobald sich das Kommunikationssystem 10 im sicheren Zustand befindet, d.h. der Ausgang 71, 72 des Masters 20 sowie die Ausgänge der Slaveeinrichtungen 150₁ und 150ₙ sind jeweils im sichern Zustand, die Schalteinrichtungen 250₁ und 250ₙ zunächst nicht geschlossen werden, und die geöffneten Schalteinrichtungen 110, 200₁ und 200ₙ nach einer definierten Zeitspanne wieder geschlossen werden. Auf diese Weise wird erreicht, dass Daten zwischen den Teilnehmern mittels Strommodulation des Ruhestroms übertragen werden können, auch wenn das Kommunikationssystem 10 im sicheren Zustand gehalten wird. Dies bedeutet allerdings, dass sichergestellt werden muss, dass, solange sich das Kommunikationssystem 10 im sicheren Zustand befindet, keine Stromimpulse aus dem Ruhestrom ausgeschnitten werden dürfen, die von den Auswerte- und Steuereinheiten 60, 160₁ und 160ₙ als ein Befehl zum Rücksetzen der jeweiligen Ausgänge interpretiert werden würden. Um in diesem Fall einen Einschleifmodus einzuleiten, könnte die Auswerte- und Steuereinheit 60 des Masters 10 die Schalteinrichtung für eine definierte Zeitdauer öffnen, sodass der Ruhestrom für diese definierte Zeitdauer unterbrochen wird. Diesen "negativen" Stromimpuls, d.h. es fließt kein Ruhestrom, können die Auswerte- und Steuereinheiten 160₁ und 160ₙ als eine Aufforderung zur Durchführung einer Einschleifphase interpretieren. Unter Ansprechen auf diesen negativen Stromimpuls definierter Länge sorgen die Auswerte- und Steuereinheiten 160₁ und 160ₙ dafür, das die Schalteinrichtung 250₁ bzw. 250ₙ sowie die Schalteinrichtungen 200₁ und 200ₙ geschlossen werden. Ebenso wird die Schalteinrichtung 110 des Masters 20 geschlossen. Dieser Zustand führt zu einer Veränderung des Gesamtwiderstands der Stromschleife 140, die durch eine damit einhergehende Spannungsänderung am Eingang 131, 132 der Stromschleife 140 von der Spannungsmesseinrichtung 240 des Masters 20 erfasst und von der Auswerte- und Steuereinheit 60 ausgewertet werden kann. Das Kommunikationssystem 10 befindet sich nunmehr im Einschleifmodus, der nachfolgend erläutert wird.

Nunmehr steuert die Auswerte- und Steuereinheit 60 des Masters 20 die Schalteinrichtung 110 zur Erzeugung eines ersten strommodulierten Signals an, in dem dieser beispielsweise einmalig für eine definierte Zeit geöffnet und dann wieder geschlossen wird. Das erste strommodulierte Signal kann, muss aber nicht die dem Master 20 in der Kette unmittelbar folgende Slaveeinrichtung 150₁ adressieren. Da die Schalteinrichtung 250₁ geschlossen ist, wird allerdings das erste strommodulierte Signal lediglich von der Stromerfassungseinrichtung 170₁ der Slaveeinrichtung 150₁ erfasst und von der Auswerte- und Steuereinheit 160₁ der Slaveeinrichtung 150₁ als entsprechendes Einschleifsignal interpretiert.

Die Auswerte- und Steuereinheit 160₁ der Slaveeinrichtung 150₁ kann dazu ausgebildet sein, zur Erzeugung einer bestimmten Antwortinformation die Schalteinrichtung 200₁ für eine definierte Zeitdauer zu öffnen oder im definierten Rhythmus zu öffnen und zu schließen. Die Antwortinformation kann die Adresse der Slaveeinrichtung 150₁ und eine Information darüber enthalten, dass die Slaveeinrichtung 150₁ zuvor das Zustandswechsel-Anforderungssignal erzeugt hat. Diese Antwortinformation wird von der Stromerfassungseinrichtung 120 des Masters 20 erfasst und von der Auswerte- und Steuereinheit 60 entsprechend ausgewertet. Die Auswerte- und Steuereinheit 160₁ des Slaves 150₁ kann dazu ausgebildet sein, unmittelbar nach dem Aussenden der Antwortinformation die Schalteinrichtung 250₁ wieder zu öffnen. Alternativ wäre denkbar, dass die Auswerte- und Steuereinheit 160₁ des Slaves 150₁ dazu ausgebildet ist, erst die Schalteinrichtung 250₁ zu öffnen und anschließend die Antwortinformation als strommoduliertes Signal zu übertragen. In diesem Fall würde allerdings die Antwortinformation des Slave 150₁ auch durch die nachgeschaltete Slaveeinrichtung 150ₙ geleitet werden. In diesem Fall kann die Auswerte- und Steuereinheit 160ₙ des Slaves 150ₙ dazu ausgebildet sein, zu erkennen, dass diese Antwortinformation nicht für sie, sondern für den Master 20 bestimmt ist.

Sobald der Master 20 die Antwortinformation von der Slaveeinrichtung 150₁ empfangen und ausgewertet hat, weiß er, dass die Slaveeinrichtung 150₁ wieder in die Stromschleife 140 eingeschleift ist und den Systemzustandswechsel angefordert hat.

Nachdem die Auswerte- und Steuereinheit 60 die Antwortinformation der Slaveeinrichtung 150₁ empfangen und ausgewertet hat, erzeugt sie ein zweites strommoduliertes Signal mittels der Schalteinrichtung 110, welches gleich dem ersten strommodulierten Signal sein kann. Alternativ kann das zweite strommodulierte Signal aber auch, sofern dem Master 20 bekannt, die Adresse der weiteren Slaveeinrichtung 150ₙ enthalten, oder auch nur eine andere zeitliche Länge als das erste Stromsignal aufweisen. Sobald die Slaveeinrichtung 150ₙ das zweite strommodulierte Signal empfangen und ausgewertet hat, kann die Auswerte- und Steuereinheit 160ₙ eine Antwortinformation durch Ansteuern der Schalteinrichtung 200ₙ erzeugen, die beispielsweise die Adresse der Slaveeinrichtung 150ₙ enthält. Nach oder vor dem Übertragen der Antwortinformation kann die Auswerte- und Steuereinheit 160ₙ die Schalteinrichtung 250ₙ wieder öffnen. Unter Ansprechen auf die Antwortinformationen der Slaveeinrichtung 150ₙ erkennt die Mastereinrichtung 20, dass nunmehr auch die zweite Slaveeinrichtung 150ₙ wieder in die Stromschleife 140 eingeschleift ist.

Dieses Prozedere wird solange wiederholt, bis alle Slaveeinrichtungen ein Antwortsignal zum Master 20 übertragen haben und folglich in die Stromschleife eingeschleift sind.

Angemerkt sei an dieser Stelle, dass der Master 20 das Einschleifen einer Slaveeinrichtung auch an einer Spannungsänderung am Eingang 131, 132 der Stromschleife mittels der Spannungsmesseinrichtung 240 erfassen kann, da mit jedem Einschleifen einer Slaveeinrichtung sich der Gesamtwiderstand der Stromschleife 140 ändert.

Sind alle Slaveeinrichtungen eingeschleift und ist das Kommunikationssystem 10 wieder betriebsbereit, kann die Auswerte- und Steuereinheit 60 unter Ansteuerung der Schalteinrichtung 110 ein sogenanntes Entriegelungssignal in die Stromschleife 140 einprägen. Das Entriegelungssignal wird von allen Slaveeinrichtungen 150₁ und 150ₙ empfangen, da nunmehr die Schalteinrichtungen 200₁ und 200ₙ geschlossen und die Schalteinrichtungen 250₁ und 250ₙ wieder geöffnet sind.

Angemerkt sei an dieser Stelle, dass der ordnungsgemäße Betrieb des Kommunikationssystems 10 durch eine Bedienperson der Mastereinrichtung 20 mitgeteilt werden kann, die daraufhin das entsprechende Entriegelungssignal erzeugt. Unter Ansprechen auf das Entriegelungssignal veranlasst die Auswerte- und Steuereinheit 160₁, dass die Schalteinrichtung 210₁ wieder geöffnet wird, während die Auswerte- und Steuereinheit 160ₙ veranlasst, dass die Schalteinrichtung 210ₙ und somit der Ausgang 184ₙ, 185ₙ der Slaveeinrichtung 150ₙ geöffnet beziehungsweise wieder eingeschaltet wird. Bei Halbleiterausgängen würden diese Ausgänge in den High-Zustand versetzt werden.

Nunmehr sei der Fall angenommen, dass das in Figur 1 gezeigte Kommunikationssystem erstmalig in Betrieb genommen werden soll. Hierzu sind alle Schalteinrichtungen, das sind die Schalteinrichtungen 110, 200₁, 200ₙ, 250₁ und 250ₙ geschlossen.

Um die Konfiguration automatisch zu erkennen zu können, wird eine Systemkonfiguration-Erkennungsphase auch Teaching-Modus genannt, vom Master 20 eingeleitet. Sofern von den Slaveeinrichtungen 150₁ und 150ₙ während des Teaching-Vorgangs keine Informationen, wie zum Beispiel Adressen, zum Master übertragen werden, bleiben die Schalteinrichtungen 200₁ und 200ₙ während der gesamten Systemkonfigurations-Erkennungsphase geschlossen.

Zunächst erzeugt die Auswerte- und Steuereinheit 60 des Masters 20 beispielsweise einen ersten Stromimpuls definierter Länge, indem der Schalter 110 für eine die definierte Zeitspanne geöffnet wird. Dieser erste Stromimpuls, der einem Ruhestrom von 0A entspricht, kann nur von der Slaveeinrichtung 150₁ gesehen werden, da die Schalter 250₁ und 250ₙ geschlossen sind. Die Auswerte- und Steuereinheit 160₁ interpretiert den ersten Stromimpuls dahingehend, dass eine System-Konfigurations-Erkennungsphase eingeleitet worden ist.

Um dem Master 20 zu signalisieren, dass die Slaveeinrichtung 150₁ in die Stromschleife 140 eingeschleift ist, veranlasst die Auswerte- und Steuereinheit 160₁ das Öffnen der Schalteinrichtung 250₁. Hierdurch verändert sich der Gesamtwiderstand der Stromschleife, da der Ruhestrom nunmehr auch durch die Slaveeinrichtung 150ₙ fließt. Ein damit einhergehende Spannungsänderung kann am Eingang 131, 132 der Stromschleife 140 von der Spannungsmesseinrichtung 240 des Masters 20 erfasst und von der Auswerte- und Steuereinheit 60 als das Einschleifen der Slaveeinrichtung 150₁ interpretiert.

Weist der Master 20 beispielsweise keine Spannungsmesseinrichtung 240 auf, kann die Slaveeinrichtung 150₁ dem Master 20 ein Einschleifen dadurch signalisieren, dass die Slaveeinrichtung 150₁ zum Beispiel die Schalteinrichtung 200₁ für einen definierten Zeitraum öffnet. Alternativ könnte die Slaveeinrichtung 150₁ eine Antwortinformation durch entsprechendes Öffnen und Schließen der Schalteinrichtung 200₁ zum Master 20 übertragen, die gegebenenfalls auch die Adresse der Slaveeinrichtung 150₁ enthält. Der entsprechend modulierte Ruhestrom wird von der Mastereinrichtung 20 über die Stromerfassungseinrichtung 120 empfangen und von der Auswerte- und Steuereinheit 60 entsprechend auswertet.

Nachdem die Mastereinrichtung 20 das Einschleifen der Slaveeinrichtung 150₁ erkannt hat, erzeugt sie einen weiteren Stromimpuls in der Stromschleife 40 durch erneutes Ansteuern der Schalteinrichtung 110. Dieser Stromimpuls kann, sofern er identisch ist mit dem ersten Stromimpuls, von der Slaveeinrichtung 150₁ als Bestätigung und von der Slaveeinrichtung 150ₙ als Beginn der Systemkonfigurations-Erkennungsphase erkannt werden. Auf diese Weise kann die Slaveeinrichtung 150₁ erkennen, dass sie ordnungsgemäß vom Master 20 erkannt wurde. Zudem kann sie hierdurch auch ihre Position innerhalb der Stromschleife 140 kontrollieren. Denn die Anzahl empfangener Stromimpuls entspricht der Anzahl an Slaveeinrichtungen, die der Slaveeinrichtung 150₁ in der Kette folgen.

Unter Ansprechen auf den weiteren Stromimpuls sorgt die Auswerte- und Steuereinheit 160ₙ dafür, dass die Schalteinrichtung 250ₙ geöffnet wird. Dadurch wird der definierte Abschlusswiderstand 270 in die Stromschleife 140 eingeschleift, was den Gesamtwiderstand der Stromschleife 140 verändert und zu einer sprunghaften Spannungsänderung am Eingang der Stromschleife 140 im Master 20 führt. Diese Spannungsänderung erkennt der Master 20 wiederum als das Einschleifen eines weiteren Slaves 150ₙ. Weist der Master 20 beispielsweise keine Spannungsmesseinrichtung 240 auf, kann die Slaveeinrichtung 150ₙ dem Master 20 ein Einschleifen dadurch signalisieren, dass die Slaveeinrichtung 150ₙ zum Beispiel die Schalteinrichtung 200₁ für einen definierten Zeitraum öffnet. Alternativ könnte die Slaveeinrichtung 150ₙ eine Antwortinformation durch entsprechendes Öffnen und Schließen der Schalteinrichtung 200₁ zum Master 20 übertragen, die gegebenenfalls auch die Adresse der Slaveeinrichtung 150ₙ enthält. Der entsprechend modulierte Ruhestrom wird von der Mastereinrichtung 20 über die Stromerfassungseinrichtung 120 empfangen und von der Auswerte- und Steuereinheit 60 entsprechend auswertet.

Sind mehr als zwei Slaveeinrichtungen an der Stromschleife 140 angeschlossen, wird das zuvor beschriebene Verfahren solange wiederholt, bis alle Slaves erkennt worden sind. Der Master 20 kann das Ende der Systemkonfigurations-Erkennungsphase beispielsweise dadurch erkennen, dass auf den vom Master 20 zuletzt erzeugten "negativen" Stromimpuls keine Spannungsänderung am Eingang der Stromschleife 140 detektiert oder kein Antwortsignal von einer weiteren Slaveeinrichtung mehr empfangen worden ist.

Sobald die Systemkonfigurations- und Erkennungsphase abgeschlossen worden ist, kann diese, sofern sie erfolgreich war, von einer Bedienperson dem Master 20 gegenüber bestätigt werden. Nach einer erfolgreichen System-Konfigurations-Erkennungsphase kennt der Master 20 die Anzahl angeschlossener Slaves und gegebenenfalls deren Adressen.

Das zuvor beschriebene Einschleifverfahren und die zuvor beschriebene Systemkonfigurations-Erkennungsphase können immer ausgeführt werden, wenn von den Slaveeinrichtungen zum Beispiel bestimmte Zustandsinformationen, wie zum Beispiel eine Information darüber, dass eine Slaveeinrichtung einen Zustandswechsel angefordert hat, abgefragt werden sollen.

Nunmehr betrachten wir noch einmal die in Figur 7 dargestellte beispielhafte Schaltungsanordnung der Stromquelle 100.

Wie bereits erwähnt, ermöglich die Schaltungsanordnung gemäß Figur 7, dass die Stromquelle 100 eingeschaltet bleiben kann, auch wenn die Stromschleife 140 kurzzeitig oder länger geöffnet wird. Die Funktionsweise der Stromquelle wird in Verbindung 8a bis 8d näher erläutert.

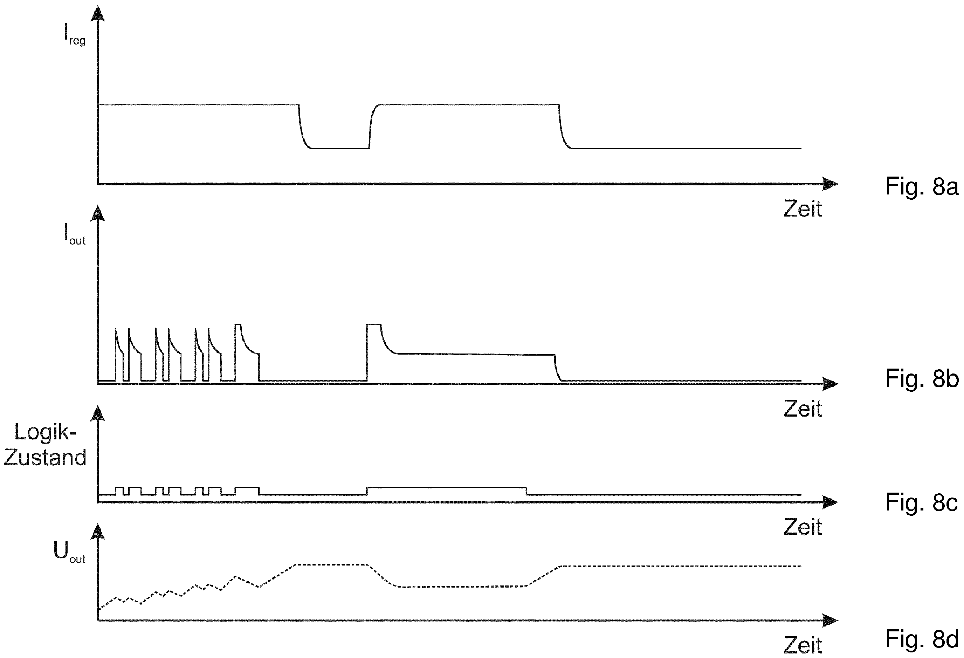

Fig. 8c zeigt in Form von logischen Zustandswechseln, die durch die in die Stromschleife eingeschleiften Schalteinrichtungen 110, 200₁ und 200ₙ hervorgerufen werden, aufeinanderfolge Betriebszustände des Kommunikationssystems 10. Ein High-Pegel zeigt an, dass die Stromschleife 140 geschlossen ist, ein Low-Pegel weist darauf hin, dass die Stromschleife unterbrochen ist. Die ersten drei Pulspaare stellen die Systemkonfigurations-Erkennungsphase bzw. Teachingphase dar, gefolgt von einem etwas längeren High-Pegel, der das Ende der Teachingphase signalisiert. Der folgende lange High-Pegel signalisiert einen Betriebsmodus im fehlerfreien Betrieb. Der sich daran anschließende lange Low-Pegel weist darauf hin, dass sich das Kommunikationssystem 10 im sichern Zustand befindet, die Stromschleife 140 ist also unterbrochen.

Figur 8b zeigt den Ausgangsstrom Iout, der als Ruhestrom durch die Stromschleife 140 fließt, wenn die Stromschleife 140 entsprechend dem in Figur 8c gezeigten logischen Schaltzustand unterbrochen und geschlossen wird. Der Ausgangsstrom Iout ist auf einem Maximalwert begrenzt.

Wie in Figur 8d zu sehen ist, nimmt die am Anschlusspunkt 132 und am Masseanschluss 131 anliegende Ausgangsspannung Uout mit jedem Öffnen der Stromschleife 140 zu. Sobald die Ausgangsspannung einen Schwellenwert erreicht, sorgt die in Figur 7 gezeigte Schaltungsanordnung dafür, dass der geregelte Strom Ireg abrupt auf einen einstellbaren Wert heruntergesetzt wird. Auf diese Weise kann der Leistungsverbrauch im Master 20 bei unterbrochener Stromschleife reduziert werden. Der zeitliche Verlauf des geregelten Stroms, der dem Strom durch den Längswiderstand 545 entspricht, ist in Fig. 8a gezeigt.

Mit anderen Worten: Die in Figur 7 gezeigte Schaltungsanordnung regelt in Abhängigkeit der am Eingang 131, 132 der Stromschleife 140 auftretenden Spannung den durch den Längswiderstand 545 fließenden geregelten Strom, so dass der Energieverbrauch während geöffneter Stromschleife im Master reduziert werden kann.

Die Aspekte der Erfindung werden nachfolgend in Verbindung mit den Zeichnungen zusammengefasst.

Es ist ein Kommunikationssystem 10 zur strommodulierten Übertragung von Daten zwischen einer Mastereinrichtung und wenigstens einer Slaveeinrichtung vorgesehen. Wie Fig. 1 beispielhaft zeigt, weist das Kommunikationssystem 10 folgende Merkmale auf:
a) eine Stromschleife 140, die zur Datenübertragung und optional zur Energieversorgung ausgebildet ist,
b) eine Mastereinrichtung 20 mit
   - einer ersten Auswerte- und Steuereinrichtung 60,
   - einer ersten in die Stromschleife 140 geschalteten, von der ersten Auswerte- und Steuereinrichtung 60 ansteuerbaren Schalteinrichtung 110, welche dazu ausgebildet ist, die Stromschleife 140 zur Übertragung von Daten zu öffnen und zu schließen,
   - einer an die Stromschleife 140 angeschlossenen elektrischen Stromquelle 100, welche dazu ausgebildet ist, insbesondere im fehlerfreien Betrieb einen konstanten Ruhestrom in die Stromschleife 140 einzuprägen,
   - einer ersten in die Stromschleife 140 geschalteten Stromerfassungseinrichtung 120, welche mit der ersten Auswerte- und Steuereinrichtung 60 verbunden ist, wobei die erste Auswerte- und Steuereinrichtung 60 dazu ausgebildet ist, den von der ersten Stromerfassungseinrichtung 120 erfassten Strom auszuwerten, wobei die erste Auswerte- und Steuereinrichtung 60 ferner dazu ausgebildet sein kann, beispielsweise in Abhängigkeit von dem Auswerteergebnis die Ausführung einer definierten Aktion zu veranlassen,
c) wenigstens eine Slaveeinrichtung 150₁, 150ₙ, die an die Stromschleife 140 angeschlossen ist und folgende Merkmale enthält:
   - eine zweite Auswerte- und Steuereinheit 160₁, 160ₙ,
   - eine zweite in die Stromschleife 140 geschaltete, von der zweiten Auswerte- und Steuereinrichtung 160₁, 160ₙ ansteuerbare Schalteinrichtung 200₁, 200ₙ, welche dazu ausgebildet ist, die Stromschleife 140 zur Übertragung von Daten zu öffnen und zu schließen,
   - eine dritte von der zweiten Auswerte- und Steuereinrichtung 160₁, 160ₙ ansteuerbare Schalteinrichtung 250₁, 250ₙ, welche dazu ausgebildet ist, im geschlossenen Zustand die Stromschleife 140 kurzzuschließen, wobei die zweite Auswerte- und Steuereinheit 160₁, 160ₙ dazu ausgebildet ist, die dritte Schalteinrichtung 250₁, 250ₙ während einer Systemkonfigurations-Erkennungsphase, die auch als Slave-Aufschaltungsphase oder Slave-Einschleifphase bezeichnet werden kann, vorübergehend zu schließen und anschließend wieder zu öffnen, und wobei die erste Auswerte- und Steuereinheit 60 dazu ausgebildet ist, ein Anschalten der wenigstens einen Slaveeinrichtung 150₁, 150ₙ an die Stromschleife 140 bzw. ein Einschleifen der wenigstens einen Slaveeinrichtung 150₁, 150ₙ in die Stromschleife 140zu erkennen, indem zum Beispiel der sich beim Öffnen der dritten Schalteinrichtung verändernde Gesamtwiderstand der Stromschleife 140 von der Mastereinrichtung 20 erfasst und ausgewertet wird,
   - eine in die Stromschleife 140 geschaltete zweite Stromerfassungseinrichtung 170₁, 170ₙ, welche mit der zweiten Auswerte- und Steuereinheit 160₁, 160ₙ verbunden ist, wobei die zweite Auswerte- und Steuereinheit 160₁, 160ₙ dazu ausgebildet ist, den von der zweiten Stromerfassungseinrichtung 170₁, 170ₙ erfassten Strom auszuwerten. Beispielsweise kann die zweite Auswerte- und Steuereinheit 160₁, 160ₙ dazu ausgebildet sein, in Abhängigkeit von dem Auswerteergebnis zum Beispiel das Ausführen einer definierten Aktion zu veranlassen.

Unter einer definierten Aktion kann zum Beispiel das Übertragen von Informationen, wie zum Beispiel das Übertragen von Adressen, Zustandsinformationen oder Steuerbefehlen, von der Mastereinrichtung zu der wenigstens einen Slaveeinrichtung oder von der wenigstens einen Slaveeinrichtung zu der Mastereinrichtung, das Deaktivieren von Ausgängen oder das teilweise oder vollständige Abschalten des Kommunikationssystems verstanden werden.

Die Stromschleife 140 fungiert insbesondere als Kommunikationsschnittstelle zwischen der Mastereinrichtung 20 und der wenigstens einen Slaveeinrichtung 150₁, 150ₙ. Auf diese Weise kann jeder Teilnehmer innerhalb kurzer Zeit auf Zustandsänderungen innerhalb des Kommunikationssystems 10 reagieren. Dank der Verwendung einer Stromschleife und dem Auswerten eines Strompegels stören Spannungshübe durch EMV-Einwirkungen nicht die Funktionsfähigkeit des Kommunikationssystems 10. Folglich kann eine ausreichende Robustheit des Systems erzielt werden.

Um Spannungsänderungen am Eingang 131, 132 der Stromschleife 140 erkennen zu können, kann
die Mastereinrichtung 20 eine mit der ersten Auswerte- und Steuereinrichtung 60 verbundene Spannungsmesseinrichtung 240, die an den Eingang der Stromschleife 140 anschließbar ist, aufweisen, wobei die erste Auswerte- und Steuereinrichtung 60 dazu ausgebildet ist, die von der Spannungsmesseinrichtung 240 gemessenen Spannungen auszuwerten. Ferner kann sie dazu ausgebildet sein, gegebenenfalls in Abhängigkeit von dem Auswerteergebnis eine definierte Aktion auszuführen oder auszulösen. Spannungsänderungen treten am Eingang 131, 132 der Stromschleife 140 zum Beispiel dann auf, wenn die dritte Schalteinrichtung 250₁, 250ₙ der wenigstens einen Slaveeinrichtung 150₁, 150ₙ geschlossen und wieder geöffnet wird oder die Stromschleife 140, aus welchen Gründen auch immer, unterbrochen wird.
Zahlreiche Ausgestaltungen hinsichtlich der Stromerfassungseinrichtungen sind denkbar. Vorzugsweise
weist die erste Stromerfassungseinrichtung 120 der Mastereinrichtung 20 und die zweite Stromerfassungseinrichtung 170₁, 170ₙ der wenigstens einen Slaveeinrichtung 150₁, 150ₙ jeweils
   i) einen Optokoppler oder
   ii) einen Messwiderstand 121; 172₁, 172ₙ und einen Differenzverstärker 122; 171₁, 171ₙ auf, welcher mit der ersten bzw. zweiten Auswerte- und Steuereinheit 60; 160₁, 160ₙ verbunden ist.

Die Mastereinrichtung 20 kann beispielsweise wenigstens einen mit der ersten Auswerte- und Steuereinheit 60 verbundenen ersten Eingang 40 aufweist, an den ein Sensor 30 anschließbar ist. Der Sensor kann ein Not-Aus-Schalter sein. Alternativ oder zusätzlich kann auch die wenigstens eine Slaveeinrichtung 150₁, 150ₙ wenigstens einen mit der zweiten Auswerte- und Steuereinrichtung 160₁, 160ₙ verbundenen zweiten Eingang 183₁, 183ₙ aufweist, an den ebenfalls ein Sensor, zum Beispiel ein Zweihand-Schalter, anschließbar ist.

Um auch als I/O-Geräte verwendet werden zu können, kann
die Mastereinrichtung 20 wenigstens einen von der ersten Auswerte- und Steuereinheit 60 ansteuerbaren ersten Ausgang 70, 71 aufweisen, an den ein Aktor anschließbar ist. Alternativ oder optional kann die wenigstens eine Slaveeinrichtung 150₁, 150ₙ wenigstens einen von der zweiten Auswerte- und Steuereinrichtung 160₁, 160ₙ ansteuerbaren zweiten Ausgang 184₁, 185_{1;} 184ₙ, 185ₙ aufweisen, an den ein Aktor anschließbar ist.

Um beispielsweise das Kommunikationssystem 10 in einen sicheren Zustand fahren zu können, kann die erste Auswerte- und Steuereinheit 60 der Mastereinrichtung 20 die erste Schalteinrichtung 110 in definierter Weise zur Erzeugung eines Zustandswechsel-Anforderungssignals ansteuern. Vorzugsweise wird hierzu die Stromschleife 140 mittels der ersten Schalteinrichtung 110 für eine vorbestimmte Mindestdauerdauer geöffnet. Denkbar ist auch, dass die Stromschleife bis zur Fehlerbeseitigung geöffnet bleibt.

Alternativ oder zusätzlich kann die zweite Auswerte- und Steuereinheit 160₁, 160ₙ die zweite Schalteinrichtung 200₁, 200ₙ der wenigstens einen Slaveeinrichtung in definierter Weise zur Erzeugung eines Zustandswechsel-Anforderungssignals ansteuern.

Um auf einen angeforderten Zustandswechsel reagieren zu können, kann die erste Auswerte- und Steuereinrichtung 60 der Mastereinrichtung 20 dazu ausgebildet sein, unter Ansprechen auf ein empfangenes Zustandswechsel-Anforderungssignal den ersten Ausgang oder den an den ersten Ausgang angeschlossenen Aktor in einen sicheren Zustand zu überführen. Die zweite Auswerte- und Steuereinheit 160₁, 160ₙ kann dazu ausgebildet sein, unter Ansprechen auf ein empfangenes Zustandswechsel-Anforderungssignal den zweiten Ausgang oder den an den zweiten Ausgang angeschlossenen Aktor in einen sicheren Zustand zu überführen.

Um einen sicheren Zustand zu erreichen, kann die erste Auswerte- und Steuereinrichtung 60 der Mastereinrichtung 20 dazu ausgebildet sein, unter Ansprechen auf ein empfangenes Zustandswechsel-Anforderungssignal die erste Schalteinrichtung 110 zu öffnen. Die zweite Auswerte- und Steuereinheit 160₁, 160ₙ kann dazu ausgebildet sein, unter Ansprechen auf ein empfangenes Zustandswechsel-Anforderungssignal die zweite Schalteinrichtung 200₁, 200ₙ zu öffnen.

Manchmal ist es wünschenswert, Daten über die Stromschleife 140 zu übertragen, auch wenn die Ausgänge in einem sicheren Zustand bleiben müssen. Demzufolge kann in vorteilhafter Weise die erste Auswerte- und Steuereinrichtung 60 dazu ausgebildet sein, den ersten Ausgang 70, 71 im sicheren Zustand zu halten und gleichzeitig die Stromschleife 140 zur Datenübertragung geschlossen zu halten. In ähnlicher Weise kann die zweite Auswerte- und Steuereinheit 160₁, 160ₙ dazu ausgebildet sein, den zweiten Ausgang 184₁, 185_{1;} 184ₙ, 185ₙ im sicheren Zustand zu halten und gleichzeitig die Stromschleife 140 zur Datenübertragung geschlossen zu halten.

Zweckmäßigerweise kann die erste Auswerte- und Steuereinrichtung 60 dazu ausgebildet sein, während einer Systemkonfigurations-Erkennungsphase die erste Schalteinrichtung 110 zu schließen und eine vorbestimmte Systeminformation in die Stromschleife 140 einzuprägen. Die Systemkonfigurations-Erkennungsphase kann automatisch unter Ansprechen auf ein bestimmtes Ereignis von der Mastereinrichtung 20 oder durch eine Bedienperson eingeleitet werden. Hierzu kann die zweite Auswerte- und Steuereinrichtung 160₁, 160ₙ der wenigstens einen Slaveeinrichtung 150₁, 150ₙ dazu ausgebildet sein, während einer Systemkonfigurations-Erkennungsphase die zweite und dritte Schalteinrichtung 200₁, 250₁; 200ₙ, 250ₙ zu schließen und nach Empfang der vorbestimmten Systeminformation die dritte Schalteinrichtung 250₁, 250ₙ wieder zu öffnen. Die vorbestimmte Systeminformation kann zum Beispiel die Adresse der wenigstens einen Slaveeinrichtung enthalten.

Vorteilhafterweise ist die elektrische Stromquelle 100 dazu ausgebildet, einen elektrischen Strom mit einstellbarem Pegel bereitzustellen.

Eine energiesparende und zuverlässig schaltbare elektrische Stromquelle 100 weist vorzugsweise ein Schaltnetzteil 600 auf, welches einen Regler und einen Abwärtswandler aufweist, wobei eine stromgesteuerte Spannungsrückführung 601 an den Regler vorgesehen ist.

Vorzugsweise können zwischen der Mastereinrichtung 20 und der wenigstens einen Slaveeinrichtung 150₁, 150ₙ als Daten übertragende Steuerdaten, Prozessdaten, Parametrierungsdaten, Diagnosedaten, Slave basierte Zustandsdaten, die zum Beispiel eine Adresse, einen Zustandswechsel-Anforderungsbefehl, Bestätigungssignale und dergleichen enthalten, und sicherheitsrelevante Daten übertragen werden.

Damit das Kommunikationssystem 10 in einer Sicherheitsanwendung zum Einsatz kommen kann, sind die Mastereinrichtung 20 und die wenigstens eine Slaveeinrichtung 150₁, 150ₙ vorzugsweise redundant ausgeführt. Beispiele einer redundant ausgebildeten Slaveeinrichtung 150₁ sind in den Figuren 2 bis 4 gezeigt, wobei die Varianten einer redundant ausgebildeten Slaveeinrichtung 150₁ durch die Bezugszeichen 150₁', 150₁" bzw. 150₁‴ gekennzeichnet sind. Beispiele einer redundant ausgebildeten Mastereinrichtung 20 sind in den Figuren 5 und 6 gezeigt, wobei die Varianten einer redundant ausgebildeten Mastereinrichtung 20 durch die Bezugszeichen 20' bzw. 20" gekennzeichnet sind. Insbesondere weist die Mastereinrichtung 20', 20" folgende weitere Merkmale auf:
- eine weitere erste Auswerte- und Steuereinrichtung 380,
- eine weitere erste in die Stromschleife 140 geschaltete, von der weiteren ersten Auswerte- und Steuereinrichtung 380 ansteuerbare Schalteinrichtung 420, welche dazu ausgebildet ist, die Stromschleife 140 zu öffnen und zu schließen,
- eine weitere erste in die Stromschleife 140 geschaltete Stromerfassungseinrichtung 410 bzw. 440, welche mit der weiteren ersten Auswerte- und Steuereinrichtung 380 verbunden ist, wobei die weitere erste Auswerte- und Steuereinrichtung 380 dazu ausgebildet ist, den von der weiteren ersten Stromerfassungseinrichtung 410 bzw. 440 erfassten Strom auszuwerten und beispielsweise in Abhängigkeit von dem Auswerteergebnis das Ausführen oder Auslösen einer definierten Aktion zu veranlassen. Alternativ oder zusätzlich kann die wenigstens eine Slaveeinrichtungen 150₁', 150₁" bzw. 150₁‴ folgende weitere Merkmale aufweisen:
- eine weitere zweite Auswerte- und Steuereinheit 290 bzw. 350,
- eine weitere zweite in die Stromschleife 140 geschaltete, von der weiteren zweiten Auswerte- und Steuereinrichtung 290 bzw. 350 ansteuerbare Schalteinrichtung 310 bzw. 340,
- eine weitere dritte von der weiteren zweiten Auswerte- und Steuereinrichtung 290 bzw. 350 ansteuerbare Schalteinrichtung 320, welche in Reihe mit bzw. parallel zur der dritten Schalteinrichtung 250₁, 250ₙ geschaltet sein kann- es kann auch eine der beiden Schalteinrichtungen entfallen -, wobei
   die weitere zweite Auswerte- und Steuereinheit 290 bzw. 350 dazu ausgebildet ist, die weitere dritte Schalteinrichtung 320 während einer Systemkonfigurations-Erkennungsphase vorübergehend zu schließen und anschließend wieder zu öffnen, und wobei die erste Auswerte- und Steuereinheit 60 und die weitere erste Auswerte- und Steuereinheit 380 jeweils dazu ausgebildet sind, ein Anschalten der wenigstens einen Slaveeinrichtung 150₁', 150₁" bzw. 150₁‴ an die Stromschleife 140 zu erkennen, und
- eine weitere in die Stromschleife 140 geschaltete zweite Stromerfassungseinrichtung 300 bzw. 330, welche mit der weiteren zweiten Auswerte- und Steuereinheit 290 bzw. 350 verbunden ist, wobei die weitere zweite Auswerte- und Steuereinheit 290 bzw. 350 dazu ausgebildet ist, den von der weiteren zweiten Stromerfassungseinrichtung 300 bzw. 330 erfassten Strom auszuwerten und beispielsweise in Abhängigkeit von dem Auswerteergebnis das Ausführen einer definierten Aktion zu veranlassen.

Die Stromschleife 140 ist vorzugsweise mit einer Abschlusseinrichtung 270 abgeschlossen ist. Die Abschlusseinrichtung ist insbesondere ein elektrischer Widerstand mit definierter Größe.

Gemäß einem Aspekt der Erfindung ist eine Mastereinrichtung 20 vorgesehen, welche zum Einsatz in einem Kommunikationssystem 10 nach einem der Ansprüche 2 bis 14 ausgebildet ist. Sie weist insbesondere und folgende Merkmale auf:
- eine erste Auswerte- und Steuereinrichtung 60,
- eine ersten in eine Stromschleife 140 schaltbare, von der ersten Auswerte- und Steuereinrichtung 60 ansteuerbaren Schalteinrichtung 110, welche dazu ausgebildet ist, die Stromschleife 140 zur Übertragung von Daten zu öffnen und zu schließen,
- eine an die Stromschleife 140 anschließbare elektrischen Stromquelle 100, welche dazu ausgebildet ist, einen konstanten Ruhestrom in die Stromschleife 140 einzuprägen,
- eine erste in die Stromschleife 140 schaltbare Stromerfassungseinrichtung 120, welche mit der ersten Auswerte- und Steuereinrichtung 60 verbunden ist, wobei die erste Auswerte- und Steuereinrichtung 60 dazu ausgebildet ist, den von der ersten Stromerfassungseinrichtung 120 erfassten Strom auszuwerten und in Abhängigkeit von dem Auswerteergebnis eine definierte Aktion auszuführen oder auszulösen, und
- eine mit der ersten Auswerte- und Steuereinrichtung 60 verbundene Spannungsmesseinrichtung 240, die an den Eingang der Stromschleife 140 anschließbar ist, wobei die erste Auswerte- und Steuereinrichtung 60 dazu ausgebildet ist, die von der Spannungsmesseinrichtung 240 gemessenen Spannungen auszuwerten. Ferner kann die erste Auswerte- und Steuereinrichtung 60 dazu ausgebildet sein, beispielsweise in Abhängigkeit von dem Auswerteergebnis das Ausführen einer definierten Aktion zu veranlassen.

Gemäß einem weiteren Aspekt ist Slaveeinrichtung 150₁, 150ₙ vorgesehen, welche zum Einsatz in einem Kommunikationssystem 10 nach einem der Ansprüche 1 bis 14 ausgebildet ist und insbesondere folgende Merkmale aufweist:
- eine Auswerte- und Steuereinheit 160₁, 160ₙ,
- eine erste in eine Stromschleife 140 schaltbare, von der zweiten Auswerte- und Steuereinrichtung 160₁, 160ₙ ansteuerbare Schalteinrichtung 200₁, 200ₙ, welche dazu ausgebildet ist, die Stromschleife 140 zur Übertragung von Daten zu öffnen oder zu schließen,
- eine zweite von der zweiten Auswerte- und Steuereinrichtung 160₁, 160ₙ ansteuerbare Schalteinrichtung 250₁, 250ₙ, welche dazu ausgebildet ist, im geschlossenen Zustand die Stromschleife 140 kurzzuschließen, wobei die zweite Auswerte- und Steuereinheit 160₁, 160ₙ dazu ausgebildet ist, die dritte Schalteinrichtung 250₁, 250ₙ während einer Systemkonfigurations-Erkennungsphase vorübergehend zu schließen und anschließend wieder zu öffnen,
- eine in die Stromschleife 140 schaltbare Stromerfassungseinrichtung 170₁, 170ₙ, welche mit der Auswerte- und Steuereinheit 160₁, 160ₙ verbunden ist, wobei die Auswerte- und Steuereinheit 160₁, 160ₙ dazu ausgebildet ist, den von der zweiten Stromerfassungseinrichtung 170₁, 170ₙ erfassten Strom auszuwerten. Ferner kann die Auswerte- und Steuereinheit 160₁, 160ₙ dazu ausgebildet sein, beispielsweise in Abhängigkeit von dem Auswerteergebnis das Ausführen einer definierten Aktion zu veranlassen.

Gemäß einem weiteren Aspekt wird ein Verfahren zum automatischen Erkennen der Konfiguration eines Kommunikationssystems 10 nach einem der Ansprüche 1 bis 14 zur Verfügung gestellt, das insbesondere folgende Schritte aufweist:
a) Schließen einer ersten Schalteinrichtung 110 einer Mastereinrichtung 20 und Schließen einer zweiten Schalteinrichtung 200₁ und einer dritten Schalteinrichtung 250₁ einer ersten an die Stromschleife 140 angeschlossenen Slaveeinrichtung 150₁, wobei die dritte Schalteinrichtung 250₁ die Stromschleife 140 kurzschließt;
b) Übertragen, von der Mastereinrichtung 20, eines ersten strommodulierten Signals über die Stromschleife 140, welches von der ersten Slaveeinrichtung 150₁ empfangen und ausgewertet wird;
c) Öffnen, nach Auswertung des ersten strommodulierten Signals, der dritten Schalteinrichtung 250₁ durch die erste Slaveeinrichtung 150₁;
d) Erkennen, in der Mastereinrichtung, ob die erste Slaveeinrichtung 150₁ an der Stromschleife 140 angeschlossen ist.

Das Anschalten der ersten Slaveeinrichtung 150₁ kann dadurch erkannt werden, dass unter Ansprechen auf das erste strommodulierte Signal eine Zustandsinformation von der ersten Slaveeinrichtung 150₁ zur Mastereinrichtung 20 übertragen wird, und zwar vor oder nach dem Öffnen der dritten Schalteinrichtung 250₁, welche der Mastereinrichtung 20 signalisiert, dass die erste Slaveeinrichtung 150₁ an der Stromschleife (140) angeschlossen ist. Optional kann die Zustandsinformation eine weitere Information enthalten, welche der Mastereinrichtung 20 signalisieren, dass die erste Slaveeinrichtung einen Zustandswechsel angefordert hat. Alternativ oder zusätzlich kann
in Schritt d) unter Ansprechen auf das Öffnen der dritten Schalteinrichtung 250₁ in der Mastereinrichtung 20 erkannt werden, dass die erste Slaveeinrichtung 150₁ an der Stromschleife 140 angeschlossen ist. Denn das Öffnen der dritten Schalteinrichtung 250₁ verändert den Gesamtwiderstand der Stromschleife 140 in definierter Weise. Diese Änderung führt zu einer Spannungsänderung am Eingang der Stromschleife 140, welche von der Mastereinrichtung 20 erkannt werden kann.

Das Kommunikationssystem 10 und somit auch das Verfahren sind skalierbar. Hierzu kann wenigstens eine weitere Slaveeinrichtung 150ₙ in Serie mit der ersten Slaveeinrichtung 150₁ in die Stromschleife 140 eingeschleift werden, wobei die erste Slaveeinrichtung 150₁ zwischen der Mastereinrichtung 20 und der wenigstens einen weiteren Slaveeinrichtung 150ₙ angeordnet ist. Schritt a) umfasst dann das Schließen einer zweiten Schalteinrichtung 200ₙ und einer dritten Schalteinrichtung 250ₙ der wenigstens einen weiteren Slaveeinrichtung 150ₙ, wobei die dritte Schalteinrichtung 250ₙ der wenigstens einen weiteren Slaveeinrichtung 150ₙ die Stromschleife 140 kurzschließt, und dass das Verfahren weitere dem Schritt d) zeitlich folgende Schritte aufweist:
e) Übertragen, von der Mastereinrichtung 20, eines zweiten strommodulierten Signals über die Stromschleife 140, welches von der einen weiteren Slaveeinrichtung 150ₙ empfangen und ausgewertet wird;
f) Öffnen, nach Auswertung des zweiten strommodulierten Signals, der dritten Schalteinrichtung 250ₙ der weiteren Slaveeinrichtung 150ₙ durch die weitere Slaveeinrichtung 150ₙ;
g) Erkennen, in der Mastereinrichtung, ob die weitere Slaveeinrichtung 150ₙ an der Stromschleife 140 angeschlossen ist.

Ein "Angeschlossen-sein" der weiteren Slaveeinrichtung kann dadurch erkannt werden, dass
unter Ansprechen auf das zweite strommodulierte Signal eine Zustandsinformation von der weiteren Slaveeinrichtung 150ₙ zur Mastereinrichtung 20 übertragen wird, und zwar vor oder nach dem Öffnen der dritten Schalteinrichtung der weiteren Slaveeinrichtung 150ₙ, wobei die Zustandsinformation der Mastereinrichtung 20 signalisiert, dass die weitere Slaveeinrichtung 150ₙ an der Stromschleife (140) angeschlossen ist. Optional kann die Zustandsinformation eine weitere Information enthalten, welche der Mastereinrichtung 20 signalisieren, dass die weitere Slaveeinrichtung einen Zustandswechsel angefordert hat. Alternativ oder zusätzlich kann in Schritt g) unter Ansprechen auf das Öffnen der dritten Schalteinrichtung 250ₙ der weiteren Slaveeinrichtung 250ₙ in der Mastereinrichtung 20 erkannt werden, dass die weitere Slaveeinrichtung 150ₙ an der Stromschleife 140 angeschlossen ist. Denn das Öffnen der dritten Schalteinrichtung 250ₙ verändert den Gesamtwiderstand der Stromschleife 140 in definierter Weise. Diese Änderung führt zu einer Spannungsänderung am Eingang der Stromschleife 140, welche von der Mastereinrichtung 20 erkannt werden kann.

Vorteilhafte Verfahrensschritte sehen vor, dass von der ersten Slaveeinrichtung 150₁ ein Systemzustandswechsel angefordert werden kann, dass der von der ersten Slaveeinrichtung 150₁ angeforderte Systemzustandswechsel der Mastereinrichtung 20 signalisiert werden kann, dass
von der weiteren Slaveeinrichtung 150ₙ ein Systemzustandswechsel angefordert werden kann, und dass
der von der weiteren Slaveeinrichtung 150ₙ angeforderte Systemzustandswechsel der Mastereinrichtung 20 signalisiert werden kann.

Befindet sich zum Beispiel das gesamte Kommunikationssystem 10 in einem sichern Zustand, so kann nach Ausführung des Schritts d) das Kommunikationssystem 10 unter Steuerung der Mastereinrichtung 20 in einen definierten Systemzustand versetzt, vorzugsweise in den Betriebszustand zurückgesetzt werden. Dieser Vorgang kann auch als Entriegelung des Kommunikationssystems bezeichnet werden. In ähnlicher Weise kann auch nach Ausführung des Schritts g) das Kommunikationssystem 10 unter Steuerung der Mastereinrichtung 20 in einen definierten Systemzustand versetzt, vorzugsweise in den Betriebszustand zurückgesetzt werden.

## Patentansprüche

1. Kommunikationssystem (10) zur strommodulierten Übertragung von Daten zwischen einer Mastereinrichtung und wenigstens einer Slaveeinrichtung, wobei das Kommunikationssystem in einer sicherheitsgerichteten Automatisierungsanlage einsetzbar ist und folgende Merkmale aufweist:
a) eine Stromschleife (140),
b) eine Mastereinrichtung (20) mit
- einer ersten Auswerte- und Steuereinrichtung (60),
- einer ersten in die Stromschleife (140) geschalteten, von der ersten Auswerte- und Steuereinrichtung (60) ansteuerbaren Schalteinrichtung (110), welche dazu ausgebildet ist, die Stromschleife (140) zur Übertragung von Daten zu öffnen und zu schließen,
- einer an die Stromschleife (140) angeschlossenen elektrischen Stromquelle (100), welche dazu ausgebildet ist, einen konstanten Ruhestrom in die Stromschleife (140) einzuprägen,
- einer ersten in die Stromschleife (140) geschalteten Stromerfassungseinrichtung (120), welche mit der ersten Auswerte- und Steuereinrichtung (60) verbunden ist, wobei die erste Auswerte- und Steuereinrichtung (60) dazu ausgebildet ist, den von der ersten Stromerfassungseinrichtung (120) erfassten Strom auszuwerten,
c) wenigstens eine Slaveeinrichtung (150₁, 150ₙ), die an die Stromschleife (140) angeschlossen ist und folgende Merkmale enthält:
- eine zweite Auswerte- und Steuereinrichtung (160₁, 160ₙ),
- eine zweite in die Stromschleife (140) geschaltete, von der zweiten Auswerte- und Steuereinrichtung (160₁, 160ₙ) ansteuerbare Schalteinrichtung (200₁, 200ₙ), welche dazu ausgebildet ist, die Stromschleife (140) zur Übertragung von Daten zu öffnen und zu schließen,
- eine dritte von der zweiten Auswerte- und Steuereinrichtung (160₁, 160ₙ) ansteuerbare Schalteinrichtung (250₁, 250ₙ), welche dazu ausgebildet ist, im geschlossenen Zustand die Stromschleife (140) kurzzuschließen, wobei
die zweite Auswerte- und Steuereinrichtung (160₁, 160ₙ) dazu ausgebildet ist, die dritte Schalteinrichtung (250₁, 250ₙ) während einer Systemkonfigurations-Erkennungsphase vorübergehend zu schließen und anschließend wieder zu öffnen, und wobei die erste Auswerte- und Steuereinrichtung (60) dazu ausgebildet ist, ein Anschalten der wenigstens einen Slaveeinrichtung (150₁, 150ₙ) an die Stromschleife (140) zu erkennen,
- eine in die Stromschleife (140) geschaltete zweite Stromerfassungseinrichtung (170₁, 170ₙ), welche mit der zweiten Auswerte- und Steuereinrichtung (160₁, 160ₙ) verbunden ist, wobei die zweite Auswerte- und Steuereinrichtung (160₁, 160ₙ) dazu ausgebildet ist, den von der zweiten Stromerfassungseinrichtung (170₁, 170ₙ) erfassten Strom auszuwerten.

2. Kommunikationssystem nach Anspruch 1,
**dadurch gekennzeichnet, dass**
die Mastereinrichtung (20) eine mit der ersten Auswerte- und Steuereinrichtung (60) verbundene Spannungsmesseinrichtung (240), die an den Eingang der Stromschleife (140) anschließbar ist, aufweist, wobei die erste Auswerte- und Steuereinrichtung (60) dazu ausgebildet ist, die von der Spannungsmesseinrichtung (240) gemessenen Spannungen auszuwerten.

3. Kommunikationssystem nach Anspruch 1 oder 2,
**dadurch gekennzeichnet, dass**
die erste Stromerfassungseinrichtung (120) und die zweite Stromerfassungseinrichtung (170₁, 170ₙ) der wenigstens einen Slaveeinrichtung (150₁, 150ₙ) jeweils
i) einen Optokoppler oder
ii) einen Messwiderstand (121; 172₁, 172ₙ) und einen Differenzverstärker (122; 171₁, 171ₙ), welcher mit der ersten bzw. zweiten Auswerte- und Steuereinrichtung (60; 160₁, 160ₙ) verbunden ist, aufweisen.

4. Kommunikationssystem nach einem der vorstehenden Ansprüche,
**dadurch gekennzeichnet, dass**
die Mastereinrichtung (20) wenigstens einen mit der ersten Auswerte- und Steuereinrichtung (60) verbundenen ersten Eingang (40) aufweist, und/oder dass
die wenigstens eine Slaveeinrichtung (150₁, 150ₙ) wenigstens einen mit der zweiten Auswerte- und Steuereinrichtung (160₁, 160ₙ) verbundenen zweiten Eingang (183₁, 183ₙ) aufweist, wobei an den ersten Eingang (40) und den zweiten Eingang (183₁, 183ₙ) jeweils ein Sensor anschließbar ist.

5. Kommunikationssystem nach einem der vorstehenden Ansprüche,
**dadurch gekennzeichnet, dass**
die Mastereinrichtung (20) wenigstens einen von der ersten Auswerte- und Steuereinrichtung (60) ansteuerbaren ersten Ausgang (70, 71) aufweist, und/oder dass die wenigstens eine Slaveeinrichtung (150₁, 150ₙ) wenigstens einen von der zweiten Auswerte- und Steuereinrichtung (160₁, 160ₙ) ansteuerbaren zweiten Ausgang (184₁, 185_{1;} 184ₙ, 185ₙ) aufweist.

6. Kommunikationssystem nach Anspruch 5,
**dadurch gekennzeichnet, dass**
die erste Auswerte- und Steuereinrichtung (60) der Mastereinrichtung (20) die erste Schalteinrichtung (260) in definierter Weise zur Erzeugung eines Zustandswechsel-Anforderungssignals ansteuern kann, dass die zweite Auswerte- und Steuereinrichtung (160₁, 160ₙ) die zweite Schalteinrichtung (200₁, 200ₙ) in definierter Weise zur Erzeugung eines Zustandswechsel-Anforderungssignals ansteuern kann, dass die erste Auswerte- und Steuereinrichtung (60) der Mastereinrichtung (20) dazu ausgebildet ist, unter Ansprechen auf ein empfangenes Zustandswechsel-Anforderungssignal den ersten Ausgang (70, 71) in einen sicheren Zustand zu überführen, und dass
die zweite Auswerte- und Steuereinrichtung (160₁, 160ₙ) dazu ausgebildet ist, unter Ansprechen auf ein empfangenes Zustandswechsel-Anforderungssignal den zweiten Ausgang (184₁, 185₁, 184ₙ, 185ₙ) in einen sicheren Zustand zu überführen.

7. Kommunikationssystem nach Anspruch 6,
**dadurch gekennzeichnet, dass**
die erste Auswerte- und Steuereinrichtung (60) der Mastereinrichtung (20) dazu ausgebildet ist, unter Ansprechen auf ein empfangenes Zustandswechsel-Anforderungssignal die erste Schalteinrichtung (110) zu öffnen, und dass die zweite Auswerte- und Steuereinrichtung (160₁, 160ₙ) dazu ausgebildet ist, unter Ansprechen auf ein empfangenes Zustandswechsel-Anforderungssignal die zweite Schalteinrichtung (200₁, 200ₙ) zu öffnen.

8. Kommunikationssystem nach Anspruch 6 oder 7,
**dadurch gekennzeichnet, dass**
die erste Auswerte- und Steuereinrichtung (60) dazu ausgebildet ist, den ersten Ausgang (70, 71) im sicheren Zustand zu halten und gleichzeitig eine Datenübertragung über die Stromschleife (140) zu ermöglichen, und dass die zweite Auswerte- und Steuereinrichtung (160₁, 160ₙ) dazu ausgebildet ist, den zweiten Ausgang (184₁, 185₁; 184ₙ, 185ₙ) im sicheren Zustand zu halten und gleichzeitig eine Datenübertragung über die Stromschleife (140) zu ermöglichen.

9. Kommunikationssystem nach einem der vorstehenden Ansprüche,
**dadurch gekennzeichnet, dass**
die erste Auswerte- und Steuereinrichtung (60) dazu ausgebildet ist, während einer Systemkonfigurations-Erkennungsphase die erste Schalteinrichtung (110) zu schließen und eine vorbestimmte Systeminformation in die Stromschleife (140) einzuprägen, und dass
die zweite Auswerte- und Steuereinrichtung (160₁, 160ₙ) der wenigstens einen Slaveeinrichtung (150₁, 150ₙ) dazu ausgebildet ist, während einer Systemkonfigurations-Erkennungsphase die zweite und dritte Schalteinrichtung (200ₗ, 250ₗ; 200ₙ, 250ₙ) zu schließen und nach Empfang der vorbestimmten Systeminformation die dritte Schalteinrichtung (250₁, 250ₙ) wieder zu öffnen.

10. Kommunikationssystem nach einem der vorstehenden Ansprüche,
**dadurch gekennzeichnet, dass**
die elektrische Stromquelle (100) dazu ausgebildet ist, einen elektrischen konstanten Strom mit einstellbarem Pegel bereitzustellen.

11. Kommunikationssystem nach einem der vorstehenden Ansprüche,
**dadurch gekennzeichnet, dass**
die elektrische Stromquelle (100) als Schaltnetzteil (800) ausgebildet ist, welches einen Regler und einen Abwärtswandler mit einer stromgesteuerten Spannungsrückführung (801) an den Regler aufweist.

12. Kommunikationssystem nach einem der vorstehenden Ansprüche,
**dadurch gekennzeichnet, dass**
die Mastereinrichtung (20', 20") folgende weitere Merkmale aufweist:
- eine weitere erste Auswerte- und Steuereinrichtung (380),
- eine weitere erste in die Stromschleife (140) geschaltete, von der weiteren ersten Auswerte- und Steuereinrichtung (380) ansteuerbare Schalteinrichtung (420), welche dazu ausgebildet ist, die Stromschleife (140) zu öffnen und zu schließen,
- eine weitere erste in die Stromschleife (140) geschaltete Stromerfassungseinrichtung (410; 440), welche mit der weiteren ersten Auswerte- und Steuereinrichtung (380) verbunden ist, wobei die weitere erste Auswerte- und Steuereinrichtung (380) dazu ausgebildet ist, den von der weiteren ersten Stromerfassungseinrichtung (440) erfassten Strom auszuwerten, und/oder dass
die wenigstens eine Slaveeinrichtungen (150_{1;} 150₁' 150₁",150₁‴) folgende weitere Merkmale aufweist:
- eine weitere zweite Auswerte- und Steuereinrichtung (290; 350),
- eine weitere zweite in die Stromschleife (140) geschaltete, von der weiteren zweiten Auswerte- und Steuereinrichtung (290; 350)) ansteuerbare Schalteinrichtung (310; 311; 340),
- eine weitere dritte von der weiteren zweiten Auswerte- und Steuereinrichtung (290; 350) ansteuerbare Schalteinrichtung (320), welche in Reihe mit oder parallel zu der dritten Schalteinrichtung (250₁, 250ₙ) geschaltet ist, wobei die weitere zweite Auswerte- und Steuereinrichtung (290; 350) dazu ausgebildet ist, die dritte Schalteinrichtung (320) während einer Systemkonfigurations-Erkennungsphase vorübergehend zu schließen und anschließend wieder zu öffnen, und wobei die erste Auswerte- und Steuereinrichtung (60) und die weitere erste Auswerte- und Steuereinrichtung (380) jeweils dazu ausgebildet sind, ein Anschalten der wenigstens einen Slaveeinrichtung (150₁, 150ₙ) an die Stromschleife (140) zu erkennen, und
- eine weitere in die Stromschleife (140) geschaltete zweite Stromerfassungseinrichtung (300; 330)), welche mit der weiteren zweiten Auswerte- und Steuereinrichtung (290; 350) verbunden ist, wobei die weitere zweite Auswerte- und Steuereinrichtung (290; 350) dazu ausgebildet ist, den von der weiteren zweiten Stromerfassungseinrichtung (300; 330) erfassten Strom auszuwerten.

13. Kommunikationssystem (10) nach einem der vorstehenden Ansprüche,
**dadurch gekennzeichnet, dass**
die Stromschleife (140) mit einer Abschlusseinrichtung (270) abgeschlossen ist.

14. Mastereinrichtung (20),
welche zum Einsatz in einem Kommunikationssystem (10) nach einem der Ansprüche 2 bis 13 ausgebildet ist und folgende Merkmale aufweist:
- eine erste Auswerte- und Steuereinrichtung (60),
- eine ersten in eine Stromschleife (140) schaltbare, von der ersten Auswerte- und Steuereinrichtung (60) ansteuerbaren Schalteinrichtung (110), welche dazu ausgebildet ist, die Stromschleife (140) zur Übertragung von Daten zu öffnen und zu schließen,
- eine an die Stromschleife (140) anschließbare elektrischen Stromquelle (100), welche dazu ausgebildet ist, einen konstanten Ruhestrom in die Stromschleife (140) einzuprägen,
- eine erste in die Stromschleife (140) schaltbare Stromerfassungseinrichtung (120), welche mit der ersten Auswerte- und Steuereinrichtung (60) verbunden ist, wobei die erste Auswerte- und Steuereinrichtung (60) dazu ausgebildet ist, den von der ersten Stromerfassungseinrichtung (120) erfassten Strom auszuwerten, und
- eine mit der ersten Auswerte- und Steuereinrichtung (60) verbundene Spannungsmesseinrichtung (240), die an den Eingang der Stromschleife (140) anschließbar ist, wobei die erste Auswerte- und Steuereinrichtung (60) dazu ausgebildet ist, in Abhängigkeit der von der Spannungsmesseinrichtung (240) gemessenen Spannungen einen Querschluss in der Stromschleife (140) oder das Aufschalten der wenigstens einen Slaveeinrichtung (150₁, 150ₙ) in die Stromschleife (140) zu erkennen.

15. Slaveeinrichtung (150₁, 150ₙ),
welche zum Einsatz in einem Kommunikationssystem (10) nach einem der Ansprüche 1 bis 13 ausgebildet ist und folgende Merkmale aufweist:
- eine Auswerte- und Steuereinrichtung (160₁, 160ₙ),
- eine erste in eine Stromschleife (140) schaltbare, von der Auswerte- und Steuereinrichtung (160₁, 160ₙ) ansteuerbare Schalteinrichtung (200₁, 200ₙ), welche dazu ausgebildet ist, die Stromschleife (140) zur Übertragung von Daten zu öffnen oder zu schließen,
- eine zweite von der Auswerte- und Steuereinrichtung (160ₗ, 160ₙ) ansteuerbare Schalteinrichtung (250₁, 250ₙ), welche dazu ausgebildet ist, im geschlossenen Zustand die Stromschleife (140) kurzuschließen, wobei die Auswerte- und Steuereinrichtung (160₁, 160ₙ) dazu ausgebildet ist, die dritte Schalteinrichtung (250₁, 250ₙ) während einer Systemkonfigurations-Erkennungsphase vorübergehend zu schließen und anschließend wieder zu öffnen,
- eine in die Stromschleife (140) schaltbare Stromerfassungseinrichtung (170₁, 170ₙ), welche mit der Auswerte- und Steuereinrichtung (160₁, 160ₙ) verbunden ist, wobei die Auswerte- und Steuereinrichtung (160₁, 160ₙ) dazu ausgebildet ist, den von der zweiten Stromerfassungseinrichtung (170₁, 170ₙ) erfassten Strom auszuwerten.

16. Verfahren zum automatischen Erkennen der Konfiguration eines Kommunikationssystems (10) nach einem der Ansprüche 1 bis 13 mit folgenden Schritten:
a) Schließen einer ersten Schalteinrichtung (110) einer Mastereinrichtung (20) und Schließen einer zweiten und einer dritten Schalteinrichtung (200₁, 250₁) einer ersten an die Stromschleife (140) angeschlossenen Slaveeinrichtung (150ₗ), wobei die dritte Schalteinrichtung (250) die Stromschleife (140) kurzschließt,
b) Übertragen, von der Mastereinrichtung (20), eines ersten strommodulierten Signals über die Stromschleife (140), welches von der ersten Slaveeinrichtung (150₁) empfangen und ausgewertet wird;
c) Öffnen, nach Auswertung des ersten strommodulierten Signals, der dritten Schalteinrichtung (250ₗ) durch die erste Slaveeinrichtung (150ₗ),
d) Erkennen, in der Mastereinrichtung, ob die erste Slaveeinrichtung (150ₗ) an der Stromschleife (140) angeschlossen ist.

17. Verfahren nach Anspruch 16,
**dadurch gekennzeichnet, dass**
unter Ansprechen auf das erste strommodulierte Signal eine Zustandsinformation von der ersten Slaveeinrichtung (150ₗ) zur Mastereinrichtung (20) übertragen wird, welche der Mastereinrichtung (20) signalisiert, dass die erste Slaveeinrichtung (150ₗ) an der Stromschleife (140) angeschlossen ist, und/oder dass
in Schritt d) unter Ansprechen auf das Öffnen der dritten Schalteinrichtung (250ₗ) in der Mastereinrichtung (20) erkannt wird, dass die erste Slaveeinrichtung (150ₗ) an der Stromschleife (140) angeschlossen ist.

18. Verfahren nach Anspruch 16 oder 17,
**dadurch gekennzeichnet, dass**
wenigstens eine weitere Slaveeinrichtung (150ₙ) in Serie mit der ersten Slaveeinrichtung (150ₗ) in die Stromschleife eingeschleift ist, wobei die erste Slaveeinrichtung (150ₗ) zwischen der Mastereinrichtung (20) und der wenigstens einen weiteren Slaveeinbrichtung (150ₙ) angeordnet ist, dass Schritt a) das Schließen einer zweiten und dritten Schalteinrichtung (200ₙ, 250ₙ) der wenigstens einen weiteren Slaveeinrichtung (150ₙ) umfasst, wobei die dritte Schalteinrichtung (250ₙ) der wenigstens einen weiteren Slaveeinrichtung (150ₙ) die Stromschleife (140) kurzschließt, und dass das Verfahren weitere dem Schritt d) zeitlich folgende Schritte aufweist:
e) Übertragen, von der Mastereinrichtung (20), eines zweiten strommodulierten Signals über die Stromschleife (140), welches von der einen weiteren Slaveeinrichtung (150ₙ) empfangen und ausgewertet wird,
f) Öffnen, nach Auswertung des zweiten strommodulierten Signals, der dritten Schalteinrichtung (250ₙ) der weiteren Slaveeinrichtung (150ₙ) durch die weitere Slaveeinrichtung (150ₙ);
g) Erkennen, in der Mastereinrichtung, ob die weitere Slaveeinrichtung (150ₙ) an der Stromschleife (140) angeschlossen ist.

19. Verfahren nach Anspruch 18,
**dadurch gekennzeichnet, dass**
unter Ansprechen auf das zweite strommodulierte Signal eine Zustandsinformation von der weiteren Slaveeinrichtung (150ₙ) zur Mastereinrichtung (20) übertragen wird, welche der Mastereinrichtung (20) signalisiert, dass die weitere Slaveeinrichtung (150ₙ) an der Stromschleife (140) angeschlossen ist, und/oder dass
in Schritt g) unter Ansprechen auf das Öffnen der dritten Schalteinrichtung (250ₙ) der weiteren Slaveeinrichtung (250ₙ) in der Mastereinrichtung (20) erkannt wird, dass die weitere Slaveeinrichtung (150ₙ) an der Stromschleife (140) angeschlossen ist.

20. Verfahren nach Anspruch 17 und 19
**dadurch gekennzeichnet, dass**
von der ersten Slaveeinrichtung (150ₗ) ein Systemzustandswechsel angefordert werden kann, dass der von der ersten Slaveeinrichtung (150ₗ) angeforderte Systemzustandswechsel der Mastereinrichtung (20) signalisiert werden kann, dass
von der weiteren Slaveeinrichtung (150ₙ) ein Systemzustandswechsel angefordert werden kann, und dass
der von der weiteren Slaveeinrichtung (150ₙ) angeforderte Systemzustandswechsel der Mastereinrichtung (20) signalisiert werden kann.

21. Verfahren nach Anspruch 16 oder 17,
**dadurch gekennzeichnet, dass**
nach Ausführung des Schritts d) das Kommunikationssystem (10) unter Steuerung der Mastereinrichtung (20) in einen definierten Systemzustand versetzt wird.

22. Verfahren nach Anspruch 18 oder 19,
**dadurch gekennzeichnet, dass**
nach Ausführung des Schritts g) das Kommunikationssystem (10) unter Steuerung der Mastereinrichtung (20) in einen definierten Systemzustand versetzt wird.

## Claims

1. A communication system (10) for current-modulated data transmission between a master device and at least one slave device, the communication system is applicable in a safety oriented automation system comprising the following features:
a) a current loop (140);
b) a master device (20) comprising
- a first evaluation and control unit (60);
- a first switching means (110) connected into the current loop (140) and actuable by the first evaluation and control unit (60), which is configured to open and close the current loop (140) for transmitting data;
- an electrical current source (100) connected to the current loop (140), which is configured to inject a constant quiescent current into the current loop (140);
- a first current detection means (120) connected into the current loop (140) and connected to the first evaluation and control unit (60), the first evaluation and control unit (60) being configured to evaluate the current detected by the first current detection means (120);
c) at least one slave device (150₁, 150ₙ) connected to the current loop (140) and comprising the following features:
- a second evaluation and control unit (160₁, 160ₙ);
- a second switching means (200₁, 200ₙ) connected into the current loop (140) and actuable by the second evaluation and control unit (160₁, 160ₙ), which is configured to open and close the current loop (140) for transmitting data;
- a third switching means (250₁, 250ₙ) actuable by the second evaluation and control unit (160₁, 160ₙ), which is configured to short-circuit the current loop (140) when in its closed state; wherein
the second evaluation and control unit (160₁, 160ₙ) is configured to temporarily close and then reopen the third switching means (250₁, 250ₙ) during a system configuration detection phase, and wherein the first evaluation and control unit (60) is configured to detect when the at least one slave device (150₁, 150ₙ) is connected to the current loop (140);
- a second current detection means (170₁, 170ₙ) connected into the current loop (140) and connected to the second evaluation and control unit (160₁, 160ₙ), the second evaluation and control unit (160₁, 160ₙ) being configured to evaluate the current detected by the second current detection means (170₁, 170ₙ).

2. The communication system as claimed in claim 1,
wherein the master device (20) comprises a voltage meter (240) connected to the first evaluation and control unit (60), which can be connected to the input of the current loop (140), wherein the first evaluation and control unit (60) is configured to evaluate the voltages measured by the voltage meter (240).

3. The communication system as claimed in claim 1 or 2,
wherein the first current detection means (120) and the second current detection means (170₁, 170ₙ) of the at least one slave device (150₁, 150ₙ) each comprise
i) an optocoupler; or
ii) a measuring resistor (121; 172₁, 172ₙ) and a differential amplifier (122; 171₁, 171ₙ) connected to the first and second evaluation and control unit (60; 160₁, 160ₙ), respectively.

4. The communication system as claimed in any of the preceding claims, wherein
the master device (20) has at least one first input (40) connected to the first evaluation and control unit (60); and/or
the at least one slave device (150₁, 150ₙ) has at least one second input (183₁, 183ₙ) connected to the second evaluation and control unit (160₁, 160ₙ), wherein a sensor is connectable to each of the first input (40) and second input (183₁, 183ₙ).

5. The communication system as claimed in any of the preceding claims, wherein
the master device (20) has at least one first output (70, 71) that is controllable by the first evaluation and control unit (60); and/or
the at least one slave device (150₁, 150ₙ) has at least one second output (184₁, 185_{1;} 184ₙ, 185ₙ) that is controllable by the second evaluation and control unit (160₁, 160ₙ).

6. The communication system as claimed in claim 5, wherein
the first evaluation and control unit (60) of the master device (20) is able to control the first switching means (260) in a defined manner for generating a state change request signal; the second evaluation and control unit (160₁, 160n) is able to control the second switching means (200₁, 200ₙ) in a defined manner for generating a state change request signal;
the first evaluation and control unit (60) of the master device (20) is configured to transfer the first output (70, 71) into a safe state in response to a received state change request signal; and
the second evaluation and control unit (160₁, 160ₙ) is configured to transfer the second output (184₁, 185₁; 184ₙ, 185ₙ) into a safe state in response to a received state change request signal.

7. The communication system as claimed in claim 6, wherein
the first evaluation and control unit (60) of the master device (20) is configured to open the first switching means (110) in response to a received state change request signal; and
the second evaluation and control unit (160₁, 160ₙ) is configured to open the second switching means (200₁, 200ₙ) in response to a received state change request signal.

8. The communication system as claimed in claim 6 or 7, wherein
the first evaluation and control unit (60) is configured to keep the first output (70, 71) in the safe state and at the same time to enable data transmission via the current loop (140); and
the second evaluation and control unit (160₁, 160ₙ) is configured to keep the second output (184₁, 185₁; 184ₙ, 185ₙ) in the safe state and at the same time to enable data transmission via the current loop (140).

9. The communication system as claimed in any of the preceding claims, wherein
the first evaluation and control unit (60) is configured to close the first switching means (110) and to inject predetermined system information into the current loop (140), during a system configuration detection phase; and
the second evaluation and control unit (160₁, 160ₙ) of the at least one slave device (150₁, 150ₙ) is configured to close the second and third switching means (200₁, 250₁; 200ₙ, 250ₙ) and to reopen the third switching means (250₁, 250ₙ) when it received the predetermined system information, during a system configuration detection phase.

10. The communication system as claimed in any of the preceding claims, wherein
the electrical current source (100) is configured to provide an electrical constant current of adjustable power level.

11. The communication system as claimed in any of the preceding claims, wherein the electrical current source (100) is configured as a switched-mode power supply (800) which comprises a regulator and a step-down converter with current-controlled voltage feedback (801) to the regulator.

12. The communication system as claimed in any of the preceding claims, wherein the master device (20', 20") has the following further features:
- a further first evaluation and control unit (380);
- a further first switching means (420) connected into the current loop (140) and actuable by the further first evaluation and control unit (380), which is configured to open and close the current loop (140);
- a further first current detection means (410; 440) connected into the current loop (140) and connected to the further first evaluation and control unit (380), the further first evaluation and control unit (380) being configured to evaluate the current detected by the further first current detection means (440); and/or wherein
the at least one slave device (150₁; 150₁', 150₁", 150₁‴) has the following further features:
- a further second evaluation and control unit (290; 350);
- a further second switching means (310; 311; 340) connected into the current loop (140) and actuable by the further second evaluation and control unit (290; 350);
- a further third switching means (320) actuable by the further second evaluation and control unit (290; 350), which is connected in series or in parallel with the third switching means (250₁, 250ₙ); wherein
the further second evaluation and control unit (290; 350) is configured to temporarily close and then reopen the third switching means (320), during a system configuration detection phase; and
wherein the first evaluation and control unit (60) and the further first evaluation and control unit (380) are each configured to detect when the at least one slave device (150₁, 150ₙ) is connected to the current loop (140); and
- a further second current detection means (300, 330) connected into the current loop (140) and connected to the further second evaluation and control unit (290; 350), the further second evaluation and control unit (290; 350) being configured to evaluate the current detected by the further second current detection means (300, 330).

13. The communication system (10) as claimed in any of the preceding claims, wherein the current loop (140) is terminated by a termination means (270).

14. A master device (20), configured for being used in a communication system (10) according to any of claims 2 to 13 and comprising the following features:
- a first evaluation and control unit (60);
- a first switching means (110) connectable into the current loop (140) and actuable by the first evaluation and control unit (60), which is configured to open and close the current loop (140) for transmitting data;
- an electrical current source (100) connectable to the current loop (140) and configured to inject a constant quiescent current into the current loop (140);
- a first current detection means (120) connectable into the current loop (140) and connected to the first evaluation and control unit (60), the first evaluation and control unit (60) being configured to evaluate the current detected by the first current detection means (120); and
- a voltage meter (240) connected to the first evaluation and control unit (60), which is connectable to the input of the current loop (140), wherein the first evaluation and control unit (60) is configured to evaluate a cross-circuit in the current loop (140) or the connection of the slave (150₁, 150ₙ) in the current loop (140) depending on the voltages measured by the voltage meter (240)

15. A slave device (150₁, 150ₙ), configured for being used in a communication system (10) according to any of claims 1 to 13 and comprising the following features:
- an evaluation and control unit (160₁, 160ₙ);
- a first switching means (200₁, 200ₙ) connectable into the current loop (140) and actuable by the evaluation and control unit (160₁, 160n), which is configured to open and close the current loop (140) for transmitting data;
- a second switching means (250₁, 250ₙ) actuable by the evaluation and control unit (160₁, 160ₙ), which is configured to short-circuit the current loop (140) when in its closed state; wherein
the evaluation and control unit (160₁, 160ₙ) is configured to temporarily close and then reopen the second switching means (250₁, 250ₙ) during a system configuration detection phase;
a current detection means (170₁, 170ₙ) connectable into the current loop (140), which is connected to the evaluation and control unit (160₁, 160ₙ), the evaluation and control unit (160₁, 160ₙ) being configured to evaluate the current detected by the current detection means (170₁, 170ₙ).

16. A method for automatically detecting the configuration of a communication system (10) according to any of claims 1 to 13, comprising the steps of:
a) closing a first switching means (110) of a master device (20) and closing a second and a third switching means (200₁, 250₁) of a first slave device (150₁) connected to the current loop (140), whereby the third switching means (250) short-circuits the current loop (140);
b) transmitting, by the master device (20), a first current-modulated signal via the current loop (140), which signal is received and evaluated by the first slave device (150₁);
c) once the first current-modulated signal has been evaluated, opening the third switching means (250₁), by the first slave device (150₁);
d) detecting, in the master device, whether the first slave device (150₁) is connected to the current loop (140).

17. The method as claimed in claim 16, comprising
in response to the first current-modulated signal, transmitting, from the first slave device (150₁) to the master device (20), state information which signals the master device (20) that the first slave device (150₁) is connected to the current loop (140); and/or
in step d), detecting, by the master device (20) and in response to the opening of the third switching means (250₁), that the first slave device (150₁) is connected to the current loop (140).

18. The method as claimed in claim 16 or 17,
wherein
at least one further slave device (150ₙ) is looped into the current loop in series with the first slave device (150₁), the first slave device (150₁) being arranged between the master device (20) and the at least one further slave device (150ₙ);
step a) comprises closing a second and third switching means (200ₙ, 250ₙ) of the at least one further slave device (150ₙ), whereby the third switching means (250ₙ) of the at least one further slave device (150ₙ) short-circuits the current loop (140); and
wherein the method comprises the following further steps, subsequently to step d):
e) transmitting, by the master device (20), a second current-modulated signal via the current loop (140), which signal is received and evaluated by the further slave device (150ₙ);
f) once the second current-modulated signal has been evaluated, opening the third switching means (250ₙ) of the further slave device (150ₙ), by the further slave device (150ₙ);
g) detecting, in the master device, whether the further slave device (150ₙ) is connected to the current loop (140).

19. The method as claimed in claim 18, comprising
in response to the second current-modulated signal, transmitting, from the further slave device (150ₙ) to the master device (20), state information which signals the master device (20) that the further slave device (150ₙ) is connected to the current loop (140); and/or
in step g), detecting, by the master device (20) and in response to the opening of the third switching means (250ₙ) of the further slave device (150ₙ), that the further slave device (150ₙ) is connected to the current loop (140).

20. The method as claimed in claim 17 and 19, wherein
a system state change can be requested by the first slave device (150₁);
the system state change requested by the first slave device (150₁) can be signaled to the master device (20);
a system state change can be requested by the further slave device (150ₙ); and
the system state change requested by the further slave device (150ₙ) can be signaled to the master device (20).

21. The method as claimed in claim 16 or 17, comprising
after execution of step d), setting the communication system (10) into a defined system state, under control of the master device (20).

22. The method as claimed in claim 18 or 19, comprising
after execution of step g), setting the communication system (10) into a defined system state, under control of the master device (20).

## Revendications

1. Système de communication (10) pour la transmission modulée par courant de données entre un dispositif maître et au moins un dispositif esclave, où le système de communication peut être utilisé dans une installation d'automatisation orientée sûreté et présente les caractéristiques suivantes :
a) une boucle de courant (140),
b) un dispositif maître (20) avec
- un premier dispositif d'analyse et de commande (60),
- un premier dispositif de commutation (110) monté dans la boucle de courant (140) et pouvant être commandé par le premier dispositif d'analyse et de commande (60), lequel est conçu pour ouvrir et fermer la boucle de courant (140) pour la transmission de données,
- une source de courant (100) électrique raccordée à la boucle de courant (140), laquelle source de courant est conçue pour injecter un courant de repos constant dans la boucle de courant (140),
- un premier dispositif de détection de courant (120) monté dans la boucle de courant (140), lequel est relié au premier dispositif d'analyse et de commande (60), où le premier dispositif d'analyse et de commande (60) est conçu pour analyser le courant détecté par le premier dispositif de détection de courant (120),
c) au moins un dispositif esclave (150₁, 150ₙ) qui est raccordé à la boucle de courant (140) et contient les caractéristiques suivantes :
- un second dispositif d'analyse et de commande (160₁, 160ₙ),
- un deuxième dispositif de commutation (200₁, 200ₙ) monté dans la boucle de courant (140) et pouvant être commandé par le second dispositif d'analyse et de commande (160₁, 160ₙ), lequel est conçu pour ouvrir et fermer la boucle de courant (140) pour la transmission de données,
- un troisième dispositif de commutation (250₁, 250ₙ) pouvant être commandé par le second dispositif d'analyse et de commande (160₁, 160ₙ), lequel est conçu pour, à l'état fermé, court-circuiter la boucle de courant (140), où
le second dispositif d'analyse et de commande (160₁, 160ₙ) est conçu pour fermer temporairement puis rouvrir le troisième dispositif de commutation (250₁, 250ₙ) pendant une phase de reconnaissance de configuration de système, et où le premier dispositif d'analyse et de commande (60) est conçu pour reconnaître une commutation de l'au moins un dispositif esclave (150₁, 150ₙ) avec la boucle de courant (140),
- un second dispositif de détection de courant (170₁, 170ₙ) monté dans la boucle de courant (140), lequel est relié au second dispositif d'analyse et de commande (160₁, 160ₙ), où le second dispositif d'analyse et de commande (160₁, 160ₙ) est conçu pour analyser le courant détecté par le second dispositif de détection de courant (170₁, 170ₙ).

2. Système de communication selon la revendication 1, **caractérisé en ce que**
le dispositif maître (20) présente un dispositif de mesure de tension (240) relié au premier dispositif d'analyse et de commande (60), lequel peut être raccordé à l'entrée de la boucle de courant (140), où le premier dispositif d'analyse et de commande (60) est conçu pour analyser les tensions mesurées par le dispositif de mesure de tension (240).

3. Système de communication selon la revendication 1 ou 2, **caractérisé en ce que**
le premier dispositif de détection de courant (120) et le second dispositif de détection de courant (170₁, 170ₙ) de l'au moins un dispositif esclave (150₁, 150ₙ) présentent respectivement
i) un optocoupleur ou
ii) une résistance de mesure (121 ; 172₁, 172ₙ) et un amplificateur différentiel (122 ; 171₁, 171ₙ), lequel est relié au premier ou au second dispositif d'analyse et de commande (60 ; 160₁, 160ₙ).

4. Système de communication selon l'une des revendications précédentes, **caractérisé en ce que**
le dispositif maître (20) présente au moins une première entrée (40) reliée au premier dispositif d'analyse et de commande (60), et/ou **en ce que**
l'au moins un dispositif esclave (150₁, 150ₙ) présente au moins une seconde entrée (183₁, 183ₙ) reliée au second dispositif d'analyse et de commande (160₁, 160ₙ), où un capteur peut être respectivement raccordé à la première entrée (40) et à la seconde entrée (183₁, 183ₙ).

5. Système de communication selon l'une des revendications précédentes, **caractérisé en ce que**
le dispositif maître (20) présente au moins une première sortie (70, 71) pouvant être commandée par le premier dispositif d'analyse et de commande (60), et/ou **en ce que** l'au moins un dispositif esclave (150₁, 150ₙ) présente au moins une seconde sortie (184₁, 185₁ ; 184ₙ, 185ₙ) pouvant être commandée par le second dispositif d'analyse et de commande (160₁, 160ₙ) .

6. Système de communication selon la revendication 5, **caractérisé en ce que**
le premier dispositif d'analyse et de commande (60) du dispositif maître (20) peut commander le premier dispositif de commutation (260) de façon définie pour la production d'un signal de requête de changement d'état,
**en ce que** le second dispositif d'analyse et de commande (160₁, 160ₙ) peut commander le second dispositif de commutation (200₁, 200ₙ) de façon définie pour la production d'un signal de requête de changement d'état,
**en ce que** le premier dispositif d'analyse et de commande (60) du dispositif maître (20) est conçu pour, en réponse à un signal de requête de changement d'état reçu, transférer la première sortie (70, 71) dans un état sûr, et **en ce que**
le second dispositif d'analyse et de commande (160₁, 160ₙ) est conçu pour, en réponse à un signal de requête de changement d'état reçu, transférer la seconde sortie (184₁, 185₁ ; 184ₙ, 185ₙ) dans un état sûr.

7. Système de communication selon la revendication 6, **caractérisé en ce que**
le premier dispositif d'analyse et de commande (60) du dispositif maître (20) est conçu pour, en réponse à un signal de requête de changement d'état reçu, ouvrir le premier dispositif de commutation (110), et **en ce que**
le second dispositif d'analyse et de commande (160₁, 160ₙ) est conçu pour, en réponse à un signal de requête de changement d'état reçu, ouvrir le deuxième dispositif de commutation (200₁, 200ₙ) .

8. Système de communication selon la revendication 6 ou 7, **caractérisé en ce que**
le premier dispositif d'analyse et de commande (60) est conçu pour maintenir la première sortie (70, 71) à l'état sûr et simultanément permettre une transmission de données via la boucle de courant (140), et **en ce que**
le second dispositif d'analyse et de commande (160₁, 160ₙ) est conçu pour maintenir la seconde sortie (184₁, 185₁ ; 184ₙ, 185ₙ) à l'état sûr et simultanément permettre une transmission de données via la boucle de courant (140).

9. Système de communication selon l'une des revendications précédentes, **caractérisé en ce que**
le premier dispositif d'analyse et de commande (60) est conçu pour, pendant une phase de reconnaissance de configuration de système, fermer le premier dispositif de commutation (110) et injecter une information de système prédéterminée dans la boucle de courant (140), et **en ce que**
le second dispositif d'analyse et de commande (160₁, 160ₙ) de l' au moins un dispositif esclave (150₁, 150ₙ) est conçu pour, pendant une phase de reconnaissance de configuration de système, fermer le deuxième et le troisième dispositif de commutation (200₁, 250₁ ; 200ₙ, 250ₙ) et, après réception de l'information de système prédéterminée, rouvrir le troisième dispositif de commutation (250₁, 250ₙ) .

10. Système de communication selon l'une des revendications précédentes, **caractérisé en ce que**
la source de courant (100) électrique est conçue pour fournir un courant électrique constant avec un niveau réglable.

11. Système de communication selon l'une des revendications précédentes, **caractérisé en ce que**
la source de courant (100) électrique est conçue en tant qu'alimentation à découpage (800), laquelle alimentation à découpage présente un régulateur et un convertisseur abaisseur avec un retour de tension (801) commandée par courant sur le régulateur.

12. Système de communication selon l'une des revendications précédentes, **caractérisé en ce que**
le dispositif maître (20', 20'') présente les autres caractéristiques suivantes :
- un autre premier dispositif d'analyse et de commande (380),
- un autre premier dispositif de commutation (420) monté dans la boucle de courant (140) et pouvant être commandé par l'autre premier dispositif d'analyse et de commande (380), lequel est conçu pour ouvrir et fermer la boucle de courant (140),
- un autre premier dispositif de détection de courant (410, 440) monté dans la boucle de courant (140), lequel est relié à l'autre premier dispositif d'analyse et de commande (380), où l'autre premier dispositif d'analyse et de commande (380) est conçu pour analyser le courant détecté par l'autre premier dispositif de détection de courant (440), et/ou **en ce que**
l'au moins un dispositif esclave (150₁ ; 150₁', 150₁", 150₁‴) présente les autres caractéristiques suivantes :
- un autre second dispositif d'analyse et de commande (290 ; 350),
- un autre deuxième dispositif de commutation (310 ; 311 ; 340) monté dans la boucle de courant (140) et pouvant être commandé par l'autre second dispositif d'analyse et de commande (290 ; 350),
- un autre troisième dispositif de commutation (320) pouvant être commandé par l'autre second dispositif d'analyse et de commande (290 ; 350), lequel est monté en série avec le ou en parallèle du troisième dispositif de commutation (250₁, 250ₙ), où l'autre second dispositif d'analyse et de commande (290 ; 350) est conçu pour fermer temporairement puis rouvrir le troisième dispositif de commutation (320) pendant une phase de reconnaissance de configuration de système, et où le premier dispositif d'analyse et de commande (60) et l'autre premier dispositif d'analyse et de commande (380) sont respectivement conçus pour reconnaître une commutation de l'au moins un dispositif esclave (150₁, 150ₙ) avec la boucle de courant (140), et
- un autre second dispositif de détection de courant (300 ; 330) monté dans la boucle de courant (140), lequel est relié à l'autre second dispositif d'analyse et de commande (290 ; 350), où l'autre second dispositif d'analyse et de commande (290 ; 350) est conçu pour analyser le courant détecté par l'autre second dispositif de détection de courant (300 ; 330).

13. Système de communication (10) selon l'une quelconque des revendications précédentes, **caractérisé en ce que**
la boucle de courant (140) est fermée avec un dispositif de fermeture (270).

14. Dispositif maître (20),
lequel est conçu pour une utilisation dans un système de communication (10) selon l'une des revendications 2 à 13 et présente les caractéristiques suivantes :
- un premier dispositif d'analyse et de commande (60),
- un premier dispositif de commutation (110) pouvant être monté dans la boucle de courant (140) et pouvant être commandé par le premier dispositif d'analyse et de commande (60), lequel est conçu pour ouvrir et fermer la boucle de courant (140) pour la transmission de données,
- une source de courant (100) électrique pouvant être raccordée à la boucle de courant (140), laquelle source de courant est conçue pour injecter un courant de repos constant dans la boucle de courant (140),
- un premier dispositif de détection de courant (120) pouvant être monté dans la boucle de courant (140), lequel est relié au premier dispositif d'analyse et de commande (60), où le premier dispositif d'analyse et de commande (60) est conçu pour analyser le courant détecté par le premier dispositif de détection de courant (120), et
- un dispositif de mesure de tension (240) relié au premier dispositif d'analyse et de commande (60), lequel peut être raccordé à l'entrée de la boucle de courant (140), où le premier dispositif d'analyse et de commande (60) est conçu pour reconnaître, en fonction des tensions mesurées par le dispositif de mesure de tension (240), un court-circuit transversal dans la boucle de courant (140) ou l'allumage de l'au moins un dispositif esclave (150₁, 150ₙ) dans la boucle de courant (140).

15. Dispositif esclave (150₁, 150ₙ),
lequel est conçu pour une utilisation dans un système de communication (10) selon l'une des revendications 1 à 13 et présente les caractéristiques suivantes :
- un dispositif d'analyse et de commande (160₁, 160ₙ),
- un premier dispositif de commutation (200₁, 200ₙ) pouvant être monté dans une boucle de courant (140) et pouvant être commandé par le dispositif d'analyse et de commande (160₁, 160ₙ), lequel est conçu pour ouvrir ou fermer la boucle de courant (140) pour la transmission de données,
- un deuxième dispositif de commutation (250₁, 250ₙ) pouvant être commandé par le dispositif d'analyse et de commande (160₁, 160ₙ), lequel est conçu pour, à l'état fermé, court-circuiter la boucle de courant (140), où le dispositif d'analyse et de commande (160₁, 160ₙ) est conçu pour fermer temporairement puis rouvrir le troisième dispositif de commutation (250₁, 250ₙ) pendant une phase de reconnaissance de configuration de système,
- un dispositif de détection de courant (170₁, 170ₙ) pouvant être monté dans la boucle de courant (140), lequel est relié au dispositif d'analyse et de commande (160₁, 160ₙ), où le dispositif d'analyse et de commande (160₁, 160ₙ) est conçu pour analyser le courant détecté par le second dispositif de détection de courant (170₁, 170ₙ).

16. Procédé de reconnaissance automatique de la configuration d'un système de communication (10) selon l'une des revendications 1 à 13 avec les étapes suivantes :
a) fermeture d'un premier dispositif de commutation (110) d'un dispositif maître (20) et fermeture d'un deuxième et d'un troisième dispositif de commutation (200₁, 250₁) d'un premier dispositif esclave (150₁) raccordé à la boucle de courant (140), où le troisième dispositif de commutation (250) court-circuite la boucle de courant (140) ;
b) transmission, par le dispositif maître (20), d'un premier signal modulé par courant via la boucle de courant (140), lequel est reçu et analysé par le premier dispositif esclave (150₁) ;
c) ouverture, après analyse du premier signal modulé par courant, du troisième dispositif de commutation (250₁) par le premier dispositif esclave (150₁) ;
d) fait de reconnaître, dans le dispositif maître, si le premier dispositif esclave (150₁) est raccordé à la boucle de courant (140).

17. Procédé selon la revendication 16, **caractérisé en ce que**
en réponse au premier signal modulé par courant, une information d'état est transmise depuis le premier dispositif esclave (150₁) vers le dispositif maître (20), laquelle signale au dispositif maître (20) que le premier dispositif esclave (150₁) est raccordé à la boucle de courant (140), et/ou **en ce que**
à l'étape d), en réponse à l'ouverture du troisième dispositif de commutation (250₁) dans le dispositif maître (20), il est reconnu que le premier dispositif esclave (150₁) est raccordé à la boucle de courant (140).

18. Procédé selon la revendication 16 ou 17, **caractérisé en ce que**
au moins un autre dispositif esclave (150ₙ) est inséré dans la boucle de courant en série avec le premier dispositif esclave (150₁), où le premier dispositif esclave (150₁) est agencé entre le dispositif maître (20) et l'au moins un autre dispositif esclave (150ₙ), **en ce que** l'étape a) comprend la fermeture d'un deuxième et troisième dispositif de commutation (200ₙ, 250ₙ) de l'au moins un autre dispositif esclave (150ₙ), où le troisième dispositif de commutation (250ₙ) de l'au moins un autre dispositif esclave (150ₙ) court-circuite la boucle de courant (140), et **en ce que** le procédé présente d'autres étapes qui suivent dans le temps l'étape d) :
e) transmission, par le dispositif maître (20), d'un second signal modulé par courant via la boucle de courant (140), lequel est reçu et analysé par l'autre dispositif esclave (150ₙ) ;
f) ouverture, après analyse du second signal modulé par courant, du troisième dispositif de commutation (250ₙ) de l'autre dispositif esclave (150ₙ) par l'autre dispositif esclave (150ₙ) ;
g) fait de reconnaître, dans le dispositif maître, si l'autre dispositif esclave (150ₙ) est raccordé à la boucle de courant (140).

19. Procédé selon la revendication 18, **caractérisé en ce que**
en réponse au second signal modulé par courant, une information d'état est transmise depuis l'autre dispositif esclave (150ₙ) vers le dispositif maître (20), laquelle signale au dispositif maître (20) que l'autre dispositif esclave (150ₙ) est raccordé à la boucle de courant (140), et/ou **en ce que**
à l'étape g), en réponse à l'ouverture du troisième dispositif de commutation (250ₙ) de l'autre dispositif esclave (250ₙ) dans le dispositif maître (20), il est reconnu que l'autre dispositif esclave (150ₙ) est raccordé à la boucle de courant (140).

20. Procédé selon les revendications 17 et 19, **caractérisé en ce que**
un changement d'état de système peut être requis par le premier dispositif esclave (150₁), **en ce que** le changement d'état de système requis par le premier dispositif esclave (150₁) peut être signalé au dispositif maître (20), **en ce que**
un changement d'état de système peut être requis par l'autre dispositif esclave (150ₙ) et **en ce que**
le changement d'état de système requis par l'autre dispositif esclave (150ₙ) peut être signalé au dispositif maître (20).

21. Procédé selon la revendication 16 ou 17, **caractérisé en ce que**
après exécution de l'étape d), le système de communication (10) est placé dans un état de système défini, par le biais de la commande du dispositif maître (20) .

22. Procédé selon la revendication 18 ou 19, **caractérisé en ce que**
après exécution de l'étape g), le système de communication (10) est placé dans un état de système défini, par le biais de la commande du dispositif maître (20) .
